# EUROPEAN PATENT APPLICATION

(11) **EP 4 797 254 A1**
(43) Date of publication of application: **26.08.2026**
(21) Application number: 24915796.7
(22) Date of filing: 24.10.2024
(51) Int. Cl.: G10L 13/00, G10L 15/26, G06F 3/16, G06F 40/205, G06F 40/58, G10L 25/87

(54) **ELECTRONIC DEVICE AND METHOD FOR DETERMINING TEXT-TO-SPEECH CONVERSION OUTPUT DURING TRANSLATION**

(30) Priority: 02.01.2024 KR 20240000587; 14.03.2024 KR 20240035904
(71) Applicant: Samsung Electronics Co., Ltd., Suwon-si, Gyeonggi-do 16677 (KR)
(72) Inventor: BYEON, Jooyong, Suwon-si Gyeonggi-do 16677 (KR); LEE, Jungin, Suwon-si Gyeonggi-do 16677 (KR); LEE, Gilho, Suwon-si Gyeonggi-do 16677 (KR); JANG, Soowon, Suwon-si Gyeonggi-do 16677 (KR); HYUN, Sungsu, Suwon-si Gyeonggi-do 16677 (KR); KIM, Kyungtae, Suwon-si Gyeonggi-do 16677 (KR); SONG, Gajin, Suwon-si Gyeonggi-do 16677 (KR)
(74) Representative: Gulde & Partner
(86) International application number: PCT/KR2024/016266
(87) International publication number: WO 2025/146907

(57) **Abstract**

A method performed by an electronic device during a call, according to an embodiment, may comprise a step in which the electronic device receives an utterance from a user of the electronic device through a microphone. The method may comprise a step in which the electronic device performs ASR on the basis of a speech signal corresponding to a portion of the utterance in order to generate a first text in a first language. The method may comprise a step in which the electronic device identifies an end point of a sentence included in the first text on the basis of one or more pause sections associated with the first text. The method may comprise a step in which the electronic device translates a portion of the first text, corresponding to the sentence, into a second text in a second language on the basis of the identified end point of the sentence included in the first text. The method may comprise a step in which the electronic device performs text-to-speech conversion on the second text. The method may comprise a step in which the electronic device generates a composite sound corresponding to the portion of the utterance before the utterance received from the user ends, on the basis of the text-to-speech conversion.

## Description

### Technical Field

The disclosure relates to an electronic device and a method of determining text-to-speech (TTS) output in translation.

### Description of Related Art

An application (or app) (e.g., a translation app, a voice assistant, a messenger app, and a call app) running on an electronic device may provide a translation (or interpretation) technology. The translation technology may translate sentences input from a user through a translation function user interface (UI) and display a translation result on a screen of the electronic device.

The above information is presented as background information only to assist with an understanding of the disclosure. No determination has been made, and no assertion is made, as to whether any of the above might be applicable as prior art with regard to the disclosure.

### Disclosure of the Invention

### Technical Solutions

Aspects of the disclosure are to address at least the above-mentioned problems and/or disadvantages and to provide at least the advantages described below. Accordingly, an aspect of the disclosure is to provide an electronic device and a method of determining text-to-speech (TTS) output in translation.

Additional aspects will be set forth in part in the description which follows and, in part, will be apparent from the description, or may be learned by practice of the presented embodiments.

In accordance with an aspect of the disclosure, a method performed by an electronic device during a call is provided. The method includes receiving, by the electronic device, via a microphone, an utterance from a user of the electronic device. The method includes performing, by the electronic device, automatic speech recognition (ASR) based on a speech signal corresponding to a portion of the utterance to generate a first text in a first language. The method includes identifying, by the electronic device, an end point of a sentence included in the first text based on at least one pause section associated with the first text. The method includes translating, by the electronic device, a portion of the first text corresponding to the sentence into a second text in a second language, based on the identified end point of the sentence included in the first text. The method includes performing, by the electronic device, a text-to-speech (TTS) conversion on the second text. The method includes generating, by the electronic device, a synthetic speech corresponding to a portion of the utterance before an end of the utterance received from the user, based on the TTS conversion.

In accordance with an aspect of the disclosure, one or more non-transitory computer-readable storage media storing one or more computer programs including computer-executable instructions that, when executed by one or more processors of an electronic device individually or collectively, cause the electronic device to perform operations are provided. The operations include receiving, by the electronic device, via a microphone, an utterance from a user of the electronic device. The operations include performing, by the electronic device, automatic speech recognition (ASR) based on a speech signal corresponding to a portion of the utterance to generate a first text in a first language. The operations include identifying, by the electronic device, an end point of a sentence included in the first text based on at least one pause section associated with the first text. The operations include translating, by the electronic device, a portion of the first text corresponding to the sentence into a second text in a second language, based on the identified end point of the sentence included in the first text. The operations include performing, by the electronic device, a text-to-speech (TTS) conversion on the second text. The operations include generating, by the electronic device, a synthetic speech corresponding to a portion of the utterance before an end of the utterance received from the user, based on the TTS conversion. In accordance with another aspect of the disclosure, an electronic device is provided. The electronic device includes a microphone. The electronic device includes memory storing one or more computer programs. The electronic device includes one or more processors communicatively coupled to the microphone and the memory. The one or more computer programs include computer-executable instructions. The computer-executable instructions, when executed by the one or more processors individually or collectively, may cause the electronic device to receive, via the microphone, an utterance from a user of the electronic device. The computer-executable instructions, when executed by the one or more processors individually or collectively, may cause the electronic device to perform ASR to generate a first text in a first language based on a speech signal corresponding to a portion of the utterance. The computer-executable instructions, when executed by the one or more processors individually or collectively, may cause the electronic device to identify an end point of a sentence included in the first text based on at least one pause section associated with the first text. The computer-executable instructions, when executed by the one or more processors individually or collectively, may cause the electronic device to translate a portion of the first text corresponding to the sentence into a second text in a second language, based on the identified end point of the sentence included in the first text. The computer-executable instructions, when executed by the one or more processors individually or collectively, may cause the electronic device to perform a TTS conversion on the second text. The computer-executable instructions, when executed by the one or more processors individually or collectively, may cause the electronic device to generate a synthetic speech corresponding to a portion of the utterance before an end of the utterance received from the user, based on the TTS conversion.

Other aspects, advantages, and salient features of the disclosure will become apparent to those skilled in the art from the following detailed description, which, taken in conjunction with the annexed drawings, discloses various embodiments of the disclosure.

### BRIEF DESCRIPTION OF THE DRAWINGS

FIG. 1 is a block diagram illustrating an example electronic device in a network environment according to an embodiment of the disclosure;
FIG. 2 is a block diagram illustrating an example integrated intelligent system according to an embodiment of the disclosure;
FIG. 3 is a diagram illustrating an example form in which concept and action relationship information is stored in a database (DB) according to an embodiment of the disclosure;
FIG. 4 is a diagram illustrating example screens showing an electronic device processing a received voice input through an intelligent application (app) according to an embodiment of the disclosure;
FIG. 5 is a diagram illustrating a concept of outputting a text-to-speech (TTS)-based synthetic speech during an in-call translation according to an embodiment of the disclosure;
FIG. 6 is a diagram illustrating an example electronic device on which a TTS-based synthetic speech outputting method during an in-call translation is executed according to an embodiment of the disclosure;
FIG. 7 is a diagram illustrating an example method of displaying a result generated by executing a translation service according to an embodiment of the disclosure;
FIG. 8 is a schematic block diagram illustrating an example translation service according to an embodiment of the disclosure;
FIG. 9 is a diagram illustrating an example method of determining a TTS output during an in-call translation according to an embodiment of the disclosure;
FIG. 10 is a diagram illustrating an example method of determining a TTS output during an in-call translation according to an embodiment of the disclosure;
FIG. 11 is a flowchart illustrating an example method of operating an electronic device according to an embodiment of the disclosure;
FIG. 12 is a flowchart illustrating an example method of operating an electronic device according to an embodiment of the disclosure; and
FIG. 13 is a diagram illustrating an example of what an electronic device displays to a user during a real-time translation according to an embodiment of the disclosure.

Throughout the drawings, it should be noted that like reference numbers are used to depict the same or similar elements, features, and structures.

### DETAILED DESCRIPTION

The following description with reference to the accompanying drawings is provided to assist in a comprehensive understanding of various embodiments of the disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the disclosure. Accordingly, it should be apparent to those skilled in the art that the following description of various embodiments of the disclosure is provided for illustration purpose only and not for the purpose of limiting the disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

It should be appreciated that the blocks in each flowchart and combinations of the flowcharts may be performed by one or more computer programs which include instructions. The entirety of the one or more computer programs may be stored in a single memory device or the one or more computer programs may be divided with different portions stored in different multiple memory devices.

Any of the functions or operations described herein can be processed by one processor or a combination of processors. The one processor or the combination of processors is circuitry performing processing and includes circuitry like an application processor (AP, e.g. a central processing unit (CPU)), a communication processor (CP, e.g., a modem), a graphics processing unit (GPU), a neural processing unit (NPU) (e.g., an artificial intelligence (AI) chip), a Wi-Fi chip, a Bluetooth^{®} chip, a global positioning system (GPS) chip, a near field communication (NFC) chip, connectivity chips, a sensor controller, a touch controller, a finger-print sensor controller, a display driver integrated circuit (IC), an audio CODEC chip, a universal serial bus (USB) controller, a camera controller, an image processing IC, a microprocessor unit (MPU), a system on chip (SoC), an IC, or the like.

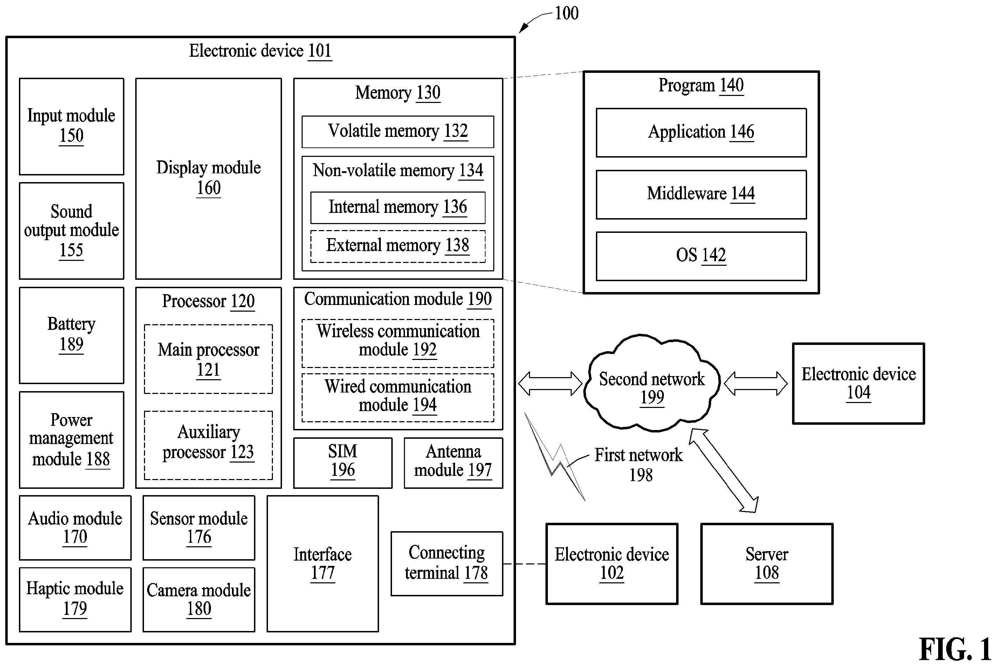

FIG. 1 is a block diagram illustrating an example electronic device 101 in a network environment 100 according to an embodiment of the disclosure.

Referring to FIG. 1, the electronic device 101 in the network environment 100 may communicate with an external electronic device 102 via a first network 198 (e.g., a short-range wireless communication network), or communicate with at least one of an external electronic device 104 and a server 108 via a second network 199 (e.g., a long-range wireless communication network). According to an embodiment, the electronic device 101 may communicate with the external electronic device 104 via the server 108. According to an embodiment, the electronic device 101 may include a processor 120, memory 130, an input module 150, a sound output module 155, a display module 160, an audio module 170, and a sensor module 176, an interface 177, a connecting terminal 178, a haptic module 179, a camera module 180, a power management module 188, a battery 189, a communication module 190, a subscriber identification module (SIM) 196, or an antenna module 197. In various embodiments, at least one (e.g., the connecting terminal 178) of the above components may be omitted from the electronic device 101, or one or more other components may be added to the electronic device 101. In various embodiments, some (e.g., the sensor module 176, the camera module 180, or the antenna module 197) of the components may be integrated as a single component (e.g., the display module 160).

The processor 120 may execute, for example, software (e.g., a program 140) to control at least one other component (e.g., a hardware or software component) of the electronic device 101 connected to the processor 120 and may perform various data processing or computations. According to an embodiment, as at least a part of data processing or computations, the processor 120 may store a command or data received from another component (e.g., the sensor module 176 or the communication module 190) in volatile memory 132, process the command or data stored in the volatile memory 132, and store resulting data in non-volatile memory 134. According to an embodiment, the processor 120 may include a main processor 121 (e.g., a central processing unit (CPU) or an application processor (AP)) or an auxiliary processor 123 (e.g., a graphics processing unit (GPU), a neural processing unit (NPU), an image signal processor (ISP), a sensor hub processor, or a communication processor (CP)) that is operable independently from or in conjunction with, the main processor 121. For example, when the electronic device 101 includes the main processor 121 and the auxiliary processor 123, the auxiliary processor 123 may be adapted to consume less power than the main processor 121 or to be specific to a specified function. The auxiliary processor 123 may be implemented separately from the main processor 121 or as a part of the main processor 121.

The auxiliary processor 123 may control at least some of functions or states related to at least one (e.g., the display module 160, the sensor module 176, or the communication module 190) of the components of the electronic device 101, instead of the main processor 121 while the main processor 121 is in an inactive (e.g., sleep) state or along with the main processor 121 while the main processor 121 is an active state (e.g., executing an application). According to an embodiment, the auxiliary processor 123 (e.g., an ISP or a CP) may be implemented as a portion of another component (e.g., the camera module 180 or the communication module 190) that is functionally related to the auxiliary processor 123. According to an embodiment, the auxiliary processor 123 (e.g., an NPU) may include a hardware structure specifically for artificial intelligence (AI) model processing. An AI model may be generated by machine learning. The machine learning may be performed by, for example, the electronic device 101, in which the AI model is performed, or performed via a separate server (e.g., the server 108). Learning algorithms may include, but are not limited to, for example, supervised learning, unsupervised learning, semi-supervised learning, or reinforcement learning. The AI model may include a plurality of artificial neural network layers. An artificial neural network may include, for example, a deep neural network (DNN), a convolutional neural network (CNN), a recurrent neural network (RNN), a restricted Boltzmann machine (RBM), a deep belief network (DBN), and a bidirectional recurrent deep neural network (BRDNN), a deep Q-network, or a combination of two or more thereof, but is not limited thereto. The AI model may alternatively or additionally include a software structure other than the hardware structure.

The memory 130 may store various pieces of data used by at least one component (e.g., the processor 120 or the sensor module 176) of the electronic device 101. The various pieces of data may include, for example, software (e.g., the program 140) and input data or output data for a command related thereto. The memory 130 may include the volatile memory 132 or the non-volatile memory 134. The non-volatile memory 134 may include internal memory 136 and external memory 138.

The program 140 may be stored as software in the memory 130 and may include, for example, an operating system (OS) 142, middleware 144, or an application 146.

The input module 150 may receive, from outside (e.g., a user) the electronic device 101, a command or data to be used by another component (e.g., the processor 120) of the electronic device 101. The input module 150 may include, for example, a microphone, a mouse, a keyboard, a key (e.g., a button), or a digital pen (e.g., a stylus pen).

The sound output module 155 may output a sound signal to the outside of the electronic device 101. The sound output module 155 may include, for example, a speaker or a receiver. The speaker may be used for general purposes, such as playing multimedia or playing a recording. The receiver may be used to receive an incoming call. According to an embodiment, the receiver may be implemented separately from the speaker or as a part of the speaker.

The display module 160 may visually provide information to the outside (e.g., a user) of the electronic device 101. The display module 160 may include, for example, a display, a hologram device, or a projector, and a control circuitry for controlling a corresponding one of the display, the hologram device, and the projector. According to an embodiment, the display module 160 may include a touch sensor adapted to sense a touch, or a pressure sensor adapted to measure an intensity of a force of the touch.

The audio module 170 may convert sound into an electric signal or vice versa. According to an embodiment, the audio module 170 may obtain the sound via the input module 150 or output the sound via the sound output module 155 or an external electronic device (e.g., the external electronic device 102, such as a speaker or headphones) directly or wirelessly connected to the electronic device 101.

The sensor module 176 may detect an operational state (e.g., power or temperature) of the electronic device 101 or an environmental state (e.g., a state of a user) external to the electronic device 101 and generate an electric signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used by the electronic device 101 to couple with an external electronic device (e.g., the external electronic device 102) directly (e.g., by wire) or wirelessly. According to an embodiment, the interface 177 may include, for example, a high-definition multimedia interface (HDMI), a universal serial bus (USB) interface, a secure digital (SD) card interface, or an audio interface.

The connecting terminal 178 may include a connector via which the electronic device 101 may physically connect to an external electronic device (e.g., the external electronic device 102). According to an embodiment, the connecting terminal 178 may include, for example, an HDMI connector, a USB connector, an SD card connector, or an audio connector (e.g., a headphones connector).

The haptic module 179 may convert an electric signal into a mechanical stimulus (e.g., a vibration or a movement) or an electrical stimulus, which may be recognized by a user via their tactile sensation or kinesthetic sensation. According to an embodiment, the haptic module 179 may include, for example, a motor, a piezoelectric element, or an electric stimulator.

The camera module 180 may capture a still image and moving images. According to an embodiment, the camera module 180 may include one or more lenses, image sensors, ISPs, and flashes.

The power management module 188 may manage power supplied to the electronic device 101. According to an embodiment, the power management module 188 may be implemented as, for example, at least a part of a power management integrated circuit (PMIC).

The battery 189 may supply power to at least one component of the electronic device 101. According to an embodiment, the battery 189 may include, for example, a primary cell, which is not rechargeable, a secondary cell, which is rechargeable, or a fuel cell.

The communication module 190 may support establishing a direct (e.g., wired) communication channel or a wireless communication channel between the electronic device 101 and an external electronic device (e.g., the external electronic device 102, the external electronic device 104, or the server 108) and performing communication via the established communication channel. The communication module 190 may include one or more CPs that are operable independently from the processor 120 (e.g., an AP) and that support direct (e.g., wired) communication or wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device, for example, the external electronic device 104, via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a fifth generation (5G) network, a next-generation communication network, the Internet, or a computer network (e.g., an LAN or a wide area network (WAN)). These various types of communication modules may be implemented as a single component (e.g., a single chip), or may be implemented as multiple components (e.g., multiple chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network after a fourth generation (4G) network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., a millimeter wave (mmWave) band) to achieve, e.g., a high data transmission rate. The wireless communication module 192 may support various technologies for securing performance on a high-frequency band, such as, e.g., beamforming, massive multiple-input and multiple-output (MIMO), full dimensional MIMO (FD-MIMO), an antenna array, analog beamforming, or a large-scale antenna. The wireless communication module 192 may support various requirements specified in the electronic device 101, an external electronic device (e.g., the external electronic device 104), or a network system (e.g., the second network 199). According to an embodiment, the wireless communication module 192 may support a peak data rate (e.g., 20 gigabits per second (Gbps) or more) for implementing eMBB, loss coverage (e.g., 164 dB or less) for implementing mMTC, or U-plane latency (e.g., 0.5 milliseconds (ms) or less for each of downlink (DL) and uplink (UL), or a round trip of 1 ms or less) for implementing URLLC.

The antenna module 197 may transmit or receive a signal or power to or from the outside (e.g., an external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., an antenna array). In such a case, at least one antenna appropriate for a communication scheme used in a communication network, such as the first network 198 or the second network 199, may be selected by, for example, the communication module 190 from the plurality of antennas. The signal or power may be transmitted or received between the communication module 190 and the external electronic device via the at least one selected antenna. According to an embodiment, another component (e.g., a radio frequency integrated circuit (RFIC)) other than the radiating element may be additionally formed as a part of the antenna module 197.

According to various embodiments, the antenna module 197 may form an mmWave antenna module. According to an embodiment, the mmWave antenna module may include a PCB, an RFIC on a first surface (e.g., a bottom surface) of the PCB, or adjacent to the first surface of the PCB and capable of supporting a designated high-frequency band (e.g., a mmWave band), and a plurality of antennas (e.g., an antenna array) disposed on a second surface (e.g., a top or a side surface) of the PCB, or adjacent to the second surface of the PCB and capable of transmitting or receiving signals in the designated high-frequency band.

At least some of the above-described components may be coupled mutually and exchange signals (e.g., commands or data) therebetween via an inter-peripheral communication scheme (e.g., a bus, general-purpose input and output (GPIO), serial peripheral interface (SPI), or mobile industry processor interface (MIPI)).

According to an embodiment, commands or data may be transmitted or received between the electronic device 101 and the external electronic device (e.g., the external electronic device 104) via the server 108 coupled with the second network 199. Each of the external electronic devices (e.g., the external electronic device 102 and 104) may be a device of the same type as or a different type from the electronic device 101. According to an embodiment, some or all the operations to be executed by the electronic device 101 may be executed by one or more of the external electronic devices (e.g., the external electronic devices 102 and 104, and the server 108). For example, if the electronic device 101 needs to perform a function or a service automatically, or in response to a request from a user or another device, the electronic device 101, instead of, or in addition to, executing the function or the service, may request one or more external electronic devices to perform at least a part of the function or service. The one or more external electronic devices receiving the request may perform the at least part of the function or service requested, or an additional function or an additional service related to the request, and may transfer a result of the performance to the electronic device 101. The electronic device 101 may provide the result, with or without further processing of the result, as at least a part of a response to the request. To that end, cloud computing, distributed computing, mobile edge computing (MEC), or client-server computing technology may be used, for example. The electronic device 101 may provide ultra-low latency services using, e.g., distributed computing or MEC. In an embodiment, the external electronic device (e.g., the external electronic device 104) may include an Internet-of-things (IoT) device. The server 108 may be an intelligent server using machine learning and/or a neural network. According to an embodiment, the external electronic device (e.g., the external electronic device 104) or the server 108 may be included in the second network 199. The electronic device 101 may be applied to intelligent services (e.g., a smart home, a smart city, a smart car, or healthcare) based on 5G communication technology or IoT-related technology.

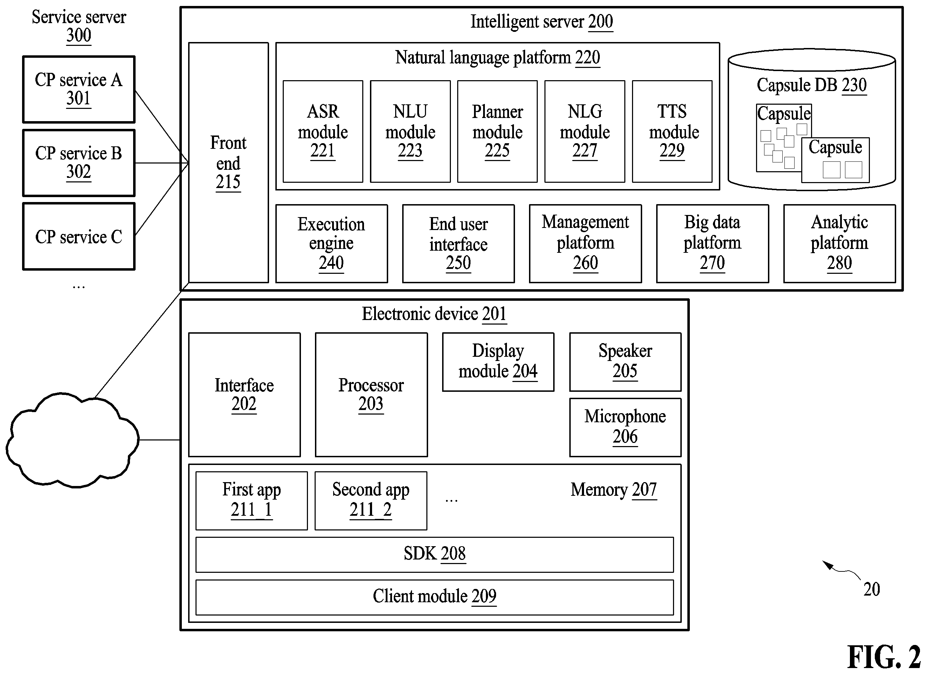

Referring to FIG. 2, according to an embodiment, an integrated intelligent system 20 may include an electronic device 201 (e.g., the electronic device 101 of FIG. 1), an intelligent server 200 (e.g., the server 108 of FIG. 1), and a service server 300 (e.g., the server 108 of FIG. 1).

The electronic device 201 may be a terminal device that is connectable to the Internet, for example, a mobile phone, a smartphone, a personal digital assistant (PDA), a laptop computer, a television (TV), a white home appliance, a wearable device, a head-mounted display (HMD), or a smart speaker.

As illustrated, the electronic device 201 may include a communication interface 202 (e.g., the interface 177 of FIG. 1), a microphone 206 (e.g., the input module 150 of FIG. 1), a speaker 205 (e.g., the sound output module 155 of FIG. 1), a display module 204 (e.g., the display module 160 of FIG. 1), memory 207 (e.g., the memory 130 of FIG. 1), or a processor 203 (e.g., the processor 120 of FIG. 1). The components listed above may be operationally or electrically connected to each other.

The communication interface 202 may be connected to an external device to transmit and receive data to and from the external device. The microphone 206 may receive sound (e.g., an utterance from a user) and convert the sound into an electrical signal. The speaker 205 may output the electrical signal as sound (e.g., voice).

The display module 204 may display an image or video. The display module 204 may also display a graphical user interface (GUI) of an application (app) (or an application program) being executed. The display module 204 may receive a touch input through a touch sensor. For example, the display module 204 may receive a text input through the touch sensor in an on-screen keyboard area displayed on the display module 204.

The memory 207 may store therein a client module 209, a software development kit (SDK) 208, and a plurality of apps 211. The client module 209 and the SDK 208 may configure a framework (or a solution program) for performing general-purpose functions. In addition, the client module 209 or the SDK 208 may configure a framework for processing a user input (e.g., a voice input, a text input, and a touch input).

The plurality of apps 211 stored in the memory 207 may be programs for performing predetermined functions. The plurality of apps 211 may include a first app 211_1, a second app 211_2, and the like. According to an embodiment, the plurality of apps 211 may each include a plurality of actions for performing the predetermined functions. For example, the apps 211 may include an alarm app, a messaging app, and/or a scheduling app. According to an embodiment, the plurality of apps 211 may be executed by the processor 203 to sequentially execute at least a portion of the actions.

The processor 203 may control the overall operation of electronic device 201. For example, the processor 203 may be electrically connected to the communication interface 202, the microphone 206, the speaker 205, and the display module 204 to perform any of the predetermined operations.

The processor 203 may also perform a predetermined function by executing a program stored in the memory 207. For example, the processor 203 may execute at least one of the client module 209 or the SDK 208 to perform the following operations for processing a user input. For example, the processor 203 may control the actions of the plurality of apps 211 through the SDK 208. The following operations described as operations of the client module 209 or the SDK 208 may be operations to be performed by the execution of the processor 203.

The client module 209 may receive a user input. For example, the client module 209 receives a voice signal corresponding to a user's utterance input through the microphone 206. Alternatively, the client module 209 may receive a touch input sensed through the display module 204. Alternatively, the client module 209 may receive a text input sensed through a keyboard or an on-screen keyboard. The client module 209 may also receive, as non-limiting examples, various types of user inputs sensed through an input module included in the electronic device 201 or an input module connected to the electronic device 201. The client module 209 may transmit the received user input to the intelligent server 200. The client module 209 may transmit, to the intelligent server 200, state information of the electronic device 201 along with the received user input. The state information may be, for example, app execution state information indicating a state of execution of an app.

The client module 209 may also receive a result corresponding to the received user input. For example, when the intelligent server 200 is capable of calculating the result corresponding to the received user input, the client module 209 may receive the result corresponding to the received user input. The client module 209 may display the received result on the display module 204. The client module 209 may also output the received result in audio through the speaker 205.

The client module 209 may receive a plan corresponding to the received user input. The client module 209 may display, on the display module 204, the results of executing a plurality of actions of an app according to the plan. For example, the client module 209 may sequentially display the results of executing the actions on the display module 204 and output the results in audio through the speaker 205. For another example, electronic device 201 may display only a result of executing a portion of the actions (e.g., a result of executing the last action) on the display module 204 and output the result in audio through the speaker 205.

According to an embodiment, the client module 209 may receive, from the intelligent server 200, a request for information required to calculate the result corresponding to the user input. According to an embodiment, the client module 209 may transmit the required information to the intelligent server 200 in response to the request.

The client module 209 may transmit information on the results of executing the actions according to the plan to the intelligent server 200. The intelligent server 200 may verify that the received user input has been correctly processed using the information.

The client module 209 may include a voice recognition module. The client module 209 may recognize a voice input for performing a limited function through the voice recognition module. For example, the client module 209 may execute an intelligent app for processing a voice input to perform an organic action through a set input (e.g., Wake up!).

The intelligent server 200 may receive information related to a user's voice input from the electronic device 201 through a communication network. According to an embodiment, the intelligent server 200 may change data related to the received voice input into a text (e.g., text data). According to an embodiment, the intelligent server 200 may generate a plan for performing a task corresponding to the voice input based on the text.

According to an embodiment, the plan may be generated by an artificial intelligence (AI) system. The AI system may be a rule-based system or a neural network-based system (e.g., a feedforward neural network (FNN) or a recurrent neural network (RNN)). Alternatively, the AI system may be a combination thereof or another AI system. The plan may be selected from a set of predefined plans or may be generated in real time in response to a request from a user. For example, the AI system may select at least one plan from among the predefined plans.

The intelligent server 200 may transmit a result according to the generated plan to the electronic device 201 or transmit the generated plan to the electronic device 201. The electronic device 201 may display the result according to the plan on the display module 204. The electronic device 201 may display, on the display module 204, a result of executing an action according to the plan.

The intelligent server 200 may include a front end 215, a natural language platform 220, a capsule database (DB) 230, an execution engine 240, an end user interface 250, a management platform 260, a big data platform 270, or an analytic platform 280.

The front end 215 may receive a user input from the electronic device 201. The front end 215 may transmit a response corresponding to the user input.

According to an embodiment, the natural language platform 220 may include an automatic speech recognition (ASR) module 221, a natural language understanding (NLU) module 223, a planner module 225, a natural language generator (NLG) module 227, or a text-to-speech (TTS) module 229.

According to an embodiment, the ASR module 221 may convert data related to a voice input received from the electronic device 201 into a text (e.g., text data). The NLU module 223 may understand a user's intention (or intent herein) using the text of the voice input. For example, the NLU module 223 may understand the user's intent by performing a syntactic or semantic analysis on a user input in the form of text data. The NLU module 223 may understand semantics of a word extracted from the user input using a linguistic feature (e.g., a syntactic element) of a morpheme or phrase and determine the intent by matching the semantics of the word to the intent. That is, the NLU module 223 may obtain intent information corresponding to a user's utterance (or speech herein). The intent information may be information indicating a user's intent that is determined through an analysis of a text. The intent information may include information indicating an operation (or function) the user intends to perform with a device. The intent information may also be referred to as goal information. A slot may be detailed information associated with the intent information. The slot may be a parameter that is required to perform an operation or action based on the user intent. The slot may be variable information that is required to perform the operation or action.

The planner module 225 may generate a plan using the intent determined by the NLU module 223 and a parameter (e.g., a slot). According to an embodiment, the planner module 225 may determine a plurality of domains required to perform a task based on the determined intent. The planner module 225 may determine a plurality of actions included in each of the domains determined based on the intent. According to an embodiment, the planner module 225 may determine a parameter required to execute the determined actions or a resulting value output by the execution of the actions. The parameter and the resulting value may be defined as a concept of a predetermined form (or class). Accordingly, a plan may include a plurality of actions and a plurality of concepts determined by a user's intent. The planner module 225 may determine a relationship between the actions and the concepts stepwise (or hierarchically). For example, the planner module 225 may determine an order of executing the actions determined based on the user's intent, based on the concepts. That is, the planner module 225 may determine the order of executing the actions based on the parameter required for the execution of the actions and the result output by the execution of the actions. Accordingly, the planner module 225 may generate the plan including connection information (e.g., ontology) between the actions and the concepts. The planner module 225 may generate a plan using information stored in the capsule DB 230 that stores therein a set of relationships between concepts and actions.

The NLG module 227 may change predetermined information into a text form. The information changed into the text form may be provided in the form of an utterance in a natural language. The TTS module 229 may change the information in the text form into information in a voice (or speech) form.

According to an embodiment, some or all of the functions of the natural language platform 220 may also be implemented in the electronic device 201.

The capsule DB 230 may store therein information associated with relationships between a plurality of concepts and a plurality of actions corresponding to a plurality of domains. A capsule described herein may include a plurality of action objects (or action information) and concept objects (or concept information) included in a plan. According to an embodiment, the capsule DB 230 may store a plurality of capsules in the form of a concept-action network (CAN). According to an embodiment, the capsules may be stored in a function registry included in the capsule DB 230.

The capsule DB 230 may include a strategy registry that stores therein strategy information required to determine a plan corresponding to a user input (e.g., a voice input). In a case where there are a plurality of plans corresponding to the user input, the strategy information may include reference information for determining a single plan. According to an embodiment, the capsule DB 230 may include a follow-up registry that stores therein information associated with follow-up actions for suggesting a follow-up action to a user in a corresponding predetermined situation. The follow-up action may include, for example, a follow-up utterance. According to an embodiment, the capsule DB 230 may include a layout registry that stores therein layout information associated with a layout of information output through the electronic device 201. According to an embodiment, the capsule DB 230 may include a vocabulary registry that stores therein vocabulary information included in capsule information. According to an embodiment, the capsule DB 230 may include a dialog registry that stores therein information associated with a dialog (or an interaction) with a user. The capsule DB 230 may update the stored objects through a developer tool. The developer tool may include, for example, a function editor for updating an action object or a concept object. The developer tool may include a vocabulary editor for updating a vocabulary. The developer tool may include a strategy editor for generating and registering a strategy for determining a plan. The developer tool may include a dialog editor for generating a dialog with a user. The developer tool may include a follow-up editor for activating a follow-up objective and editing a follow-up utterance that provides a hint. The follow-up objective may be determined based on a currently set objective, a user's preference, or an environmental condition. The capsule DB 230 may also be implemented in the electronic device 201.

The execution engine 240 may calculate a result using the generated plan. The end user interface 250 may transmit the calculated result to the electronic device 201. Accordingly, the electronic device 201 may receive the result and provide the received result to a user. The management platform 260 may manage information used by the intelligent server 200. The big data platform 270 may collect data of a user. The analytic platform 280 may manage a quality of service (QoS) of the intelligent server 200. For example, the analytic platform 280 may manage the components and a processing rate (or efficiency) of the intelligent server 200.

The service server 300 may provide a preset service (e.g., food ordering or hotel reservation) to the electronic device 201. According to an embodiment, the service server 300 may be a server operated by a third party. A service of the service server 300, such as, a CP service A 301 and a CP service B 302, may interact with the front end 215 of the intelligent server 200. The service server 300 may provide the intelligent server 200 with information to be used for generating a plan corresponding to a received user input. The provided information may be stored in the capsule DB 230. The service server 300 may also provide the intelligent server 200 with resulting information according to the plan.

In the integrated intelligent system 20 described above, the electronic device 201 may provide various intelligent services to a user in response to a user input from the user. The user input may include, for example, an input made through a physical button, a touch input, or a voice input.

The electronic device 201 may provide a voice (or speech) recognition service through an intelligent app (or a voice/speech recognition app) stored therein. In this case, the electronic device 201 may recognize a user utterance or a voice input received from a user through the microphone 206 and provide the user with a service corresponding to the recognized voice input.

The electronic device 201 may perform a predetermined action alone or together with at least one of the intelligent server 200 or the service server 300 based on the received voice input. For example, the electronic device 201 may execute an app corresponding to the received voice input and perform the action through the executed app.

In a case where the electronic device 201 provides the service together with at least one of the intelligent server 200 or the service server 300, the electronic device 201 may detect a user utterance using the microphone 206 and generate a signal (or voice (or speech) data) corresponding to the detected user utterance. The electronic device 201 may transmit the voice data to the intelligent server 200 using the communication interface 202.

In response to the voice input received from the electronic device 201, the intelligent server 200 may generate a plan for performing a task corresponding to the voice input or a result of performing an action according to the plan. The plan may include, for example, a plurality of actions for performing the task corresponding to the voice input of the user, and a plurality of concepts related to the actions. The concepts may define parameters input to the execution of the actions or resulting values output by the execution of the actions. The plan may include connection information (e.g., ontology) between the actions and the concepts.

The electronic device 201 may receive a response using the communication interface 202. The electronic device 201 may output a voice signal generated in the electronic device 201 to the outside using the speaker 205, or output an image generated in the electronic device 201 to the outside using the display module 204.

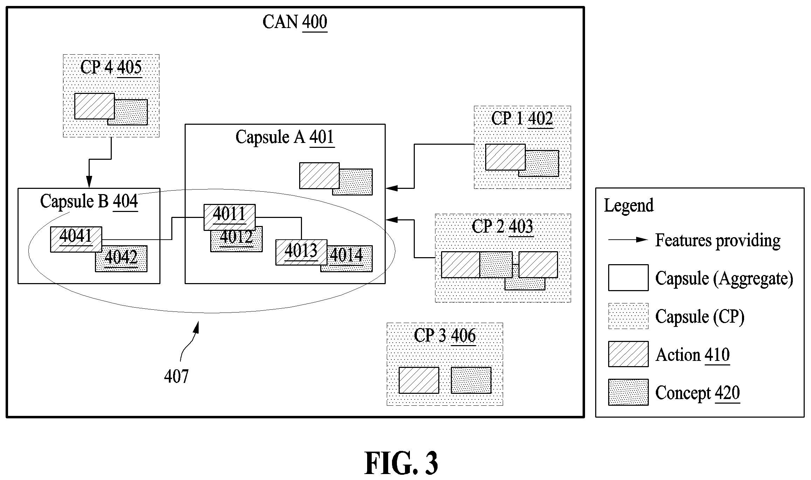

FIG. 3 is a diagram illustrating an example form in which concept and action relationship information is stored in a DB according to an embodiment of the disclosure.

Referring to FIG. 3, a capsule DB (e.g., the capsule DB 230 of FIG. 2) of an intelligent server (e.g., the intelligent server 200 of FIG. 2) may store therein capsules in the form of a concept action network (CAN) 400. The capsule DB may store, in the form of the CAN 400, actions for processing a task corresponding to a voice input of a user and parameters necessary for the actions.

The capsule DB may store a plurality of capsules, for example, a capsule A 401 and a capsule B 404, respectively corresponding to a plurality of domains. According to an embodiment, one capsule (e.g., the capsule A 401) may correspond to one domain (e.g., a location (geo) app). In addition, one capsule may correspond to at least one service provider (e.g., CP1 402 or CP2 403) for performing a function for a domain related to the capsule. One capsule may include at least one action 410 and at least one concept 420 for performing a preset function. The CAN 400 may also include another information such as CP 3 406. The capsule B 404 may also correspond to a service provider (e.g., CP 4 405).

A natural language platform (e.g., the natural language platform 220 of FIG. 2) may generate a plan for performing a task corresponding to a received voice input using the capsules stored in the capsule DB. For example, a planner module (e.g., the planner module 225 of FIG. 2) of the natural language platform may generate the plan using the capsules stored in the capsule DB. For example, the planner module may generate a plan 407 using actions 4011 and 4013 and concepts 4012 and 4014 of the capsule A 401 and using an action 4041 and a concept 4042 of the capsule B 404.

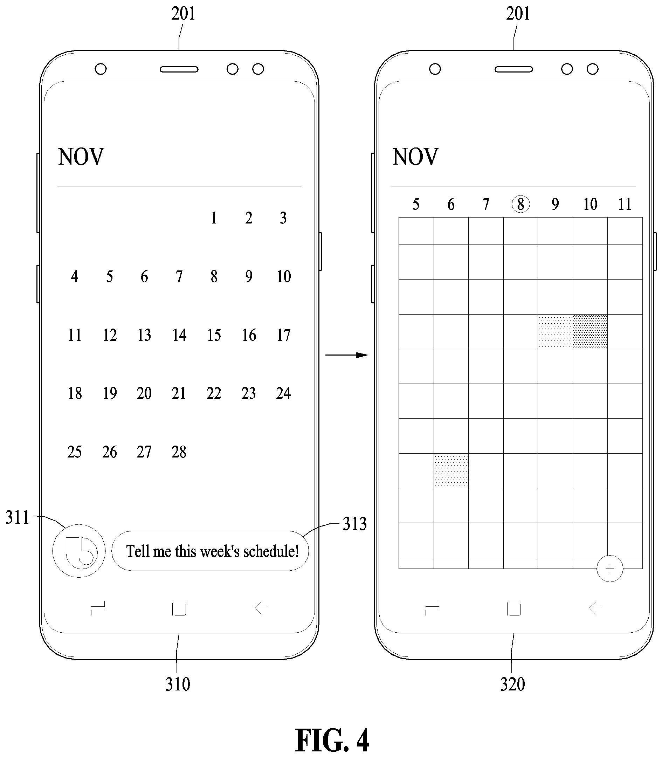

FIG. 4 is a diagram illustrating example screens showing an electronic device processing a received voice input through an intelligent app according to an embodiment of the disclosure.

The electronic device 201 may execute an intelligent app to process a user input through an intelligent server (e.g., the intelligent server 200 of FIG. 2).

Referring to FIG. 4, according to an embodiment, on a first screen 310, when recognizing a predetermined voice input (e.g., Wake up!) or receiving an input through a hardware key (e.g., a dedicated hardware key), the electronic device 201 may execute an intelligent app for processing the voice input. For example, the electronic device 201 may execute the intelligent app during the execution of a scheduling app. According to an embodiment, the electronic device 201 may display an object (e.g., an icon) 311 corresponding to the intelligent app on a display module (e.g., the display module 160 of FIG. 1 and the display module 204 of FIG. 2). According to an embodiment, the electronic device 201 may receive the voice input corresponding to a user utterance. That is, the electronic device 201 may receive a voice input "Tell me this week's schedule!", for example. According to an embodiment, the electronic device 201 may display, on the display module 204, a user interface (UI) 313 (e.g., an input window) of the intelligent app on which a text (e.g., text data) of the received voice input is displayed.

According to an embodiment, on a second screen 320, the electronic device 201 may display, on the display module 204, a result corresponding to the received voice input. For example, the electronic device 201 may receive a plan corresponding to the received user input and display, on the display module 204, "this week's schedule" according to the plan.

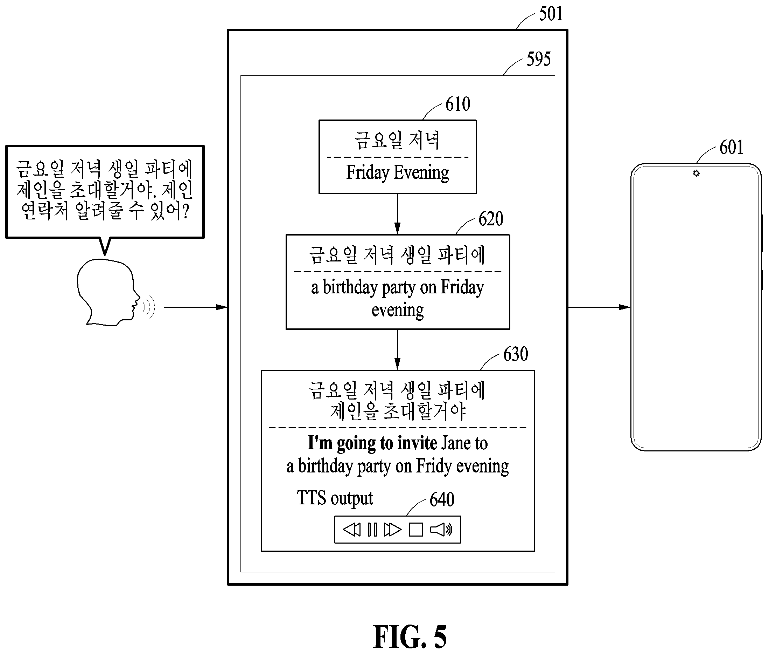

FIG. 5 is a diagram illustrating a concept of outputting a text-to-speech (TTS)-based synthetic speech during an in-call translation according to an embodiment of the disclosure.

Referring to FIG. 5, according to an embodiment, an electronic device 501 (e.g., the electronic device 101 of FIG. 1 and the electronic device 201 of FIG. 2) may provide a translation function (or an interpretation function) during a call with an external electronic device 601. The electronic device 501 may translate in real time a speech of a user (e.g., a first user) of the electronic device 501 being input during the call and/or a speech of a user (e.g., a second user) of the external electronic device 601 being received during the call. The electronic device 501 may display a text obtained by translating the speech of the first user on a display module 595 (e.g., a screen) of the electronic device 501, generate a synthetic speech by performing a TTS conversion on the text obtained by translating the speech of the first user, and provide the synthetic speech to the external electronic device 601. The electronic device 501 may also display a text obtained by translating the speech of the second user on the display module 595 of the electronic device 501, generate a synthetic speech by performing a TTS conversion on the text obtained by translating the speech of the second user, and provide the synthetic speech to the first user.

According to an embodiment, when translating a speech signal based on an utterance (or speech) of a user during a real-time translation during a call (also referred to herein as an "in-call translation"), the electronic device 501 may break down the utterance at one point and perform a TTS conversion on a text obtained by translating a portion of the utterance before a point at which the utterance is broken down to generate a synthetic speech and output the generated synthetic speech. For ease of description, an assumption that the user of the electronic device 501 utters a speech in a first language, for example, " 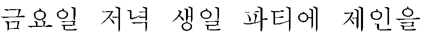 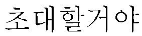 . 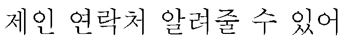 ?", is provided herein. In this case, the electronic device 501 may receive a speech signal in real time in response to the utterance of the user of the electronic device 501 and display sentences translated in real time on the display module 595 along with ASR results, as shown in 610, 620, and 630. The electronic device 501 may perform a TTS conversion on a text (e.g., "I'm going to invite Jane to a birthday party on Friday evening. Can you give me her contact information?") translated in real time into a second language from a (original) text (e.g., " 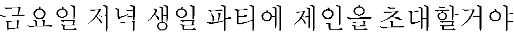 . 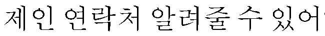 ?"), and output a synthetic speech. The electronic device 501 may display, on the display module 595, an indicator 640 (e.g., UI) for controlling an output of the synthetic speech at a time point intended to output a result by performing the TTS conversion. The electronic device 501 may mix the speech signal of " 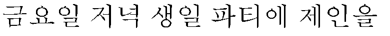 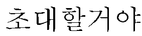 " and the synthetic speech "I'm going to invite Jane to a birthday party on Friday evening" and transmit a result of the mixing to the external electronic device 601. The electronic device 501 may mix the speech signal of " 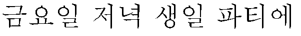 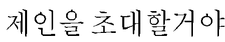 " with the synthetic speech of "I'm going to invite Jane to a birthday party on Friday evening" at a time point intended to convert a text into a speech and output a result therefrom, and may automatically transmit a result of the mixing to the external electronic device 601 or transmit the result to the external electronic device 601 in response to a user input via the indicator 640 (e.g., UI). When the synthetic speech of "I'm going to invite Jane to a birthday party on Friday evening" is generated, the speech signal of " 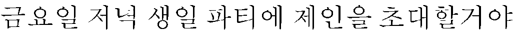 " and the synthetic speech of "I'm going to invite Jane to a birthday party on Friday evening" may be automatically mixed to be transmitted to the external electronic device 601 or may be manually transmitted to the external electronic device 601 in response to a user input made via the indicator 640 (e.g., UI). After generating and outputting the synthetic speech of "I'm going to invite Jane to a birthday party on Friday evening," the electronic device 501 may also process " 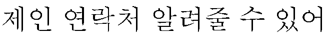 ?" and transmit a result to the external electronic device 601 in the same manner as described above.

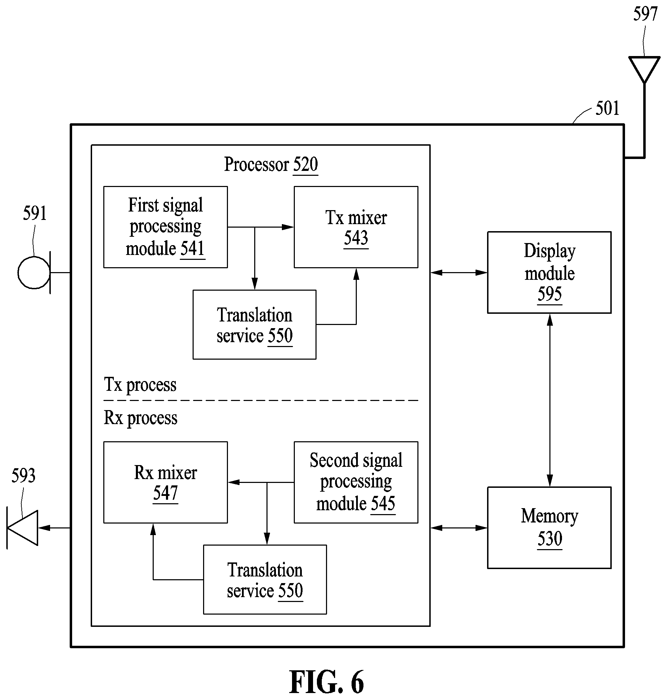

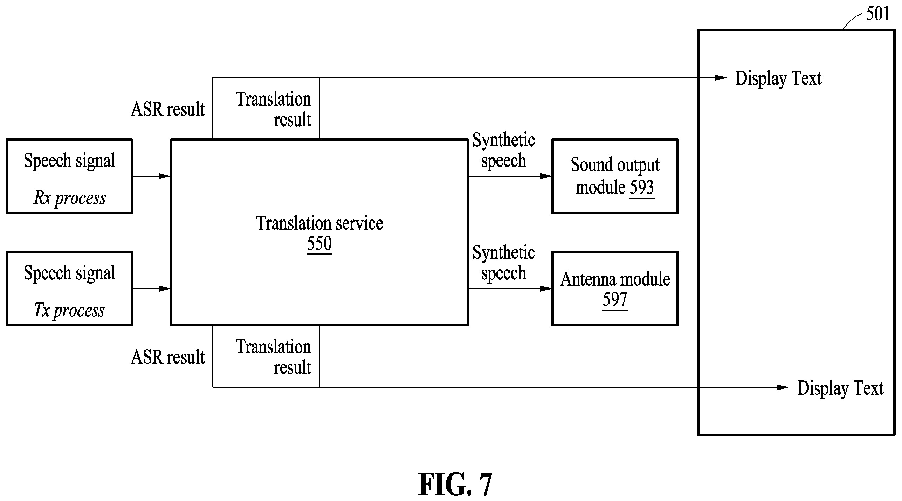

FIG. 6 is a diagram illustrating an example electronic device on which a TTS-based synthetic speech outputting method during an in-call translation is executed according to an embodiment of the disclosure, and FIG. 7 is a diagram illustrating an example method of displaying a result generated by executing a translation service according to an embodiment of the disclosure.

Referring to FIGS. 6 and 7, according to an embodiment, the electronic device 501 may convert a translated text into a speech signal during a translation during a call with an external electronic device (e.g., the external electronic device 601 of FIG. 5), also herein referred to as an "in-call translation" (e.g., real-time translation), and output a result from the conversion. In this case, the electronic device 501 may determine a TTS output (e.g., a TTS conversion output time) for the translated text.

According to an embodiment, the electronic device 501 may be implemented as at least one of the following, for example, a smartphone, a tablet personal computer (PC), a mobile phone, a speaker (e.g. AI speakers), a video phone, an e-book reader, a desktop PC, a laptop PC, a netbook computer, a workstation, a server, a personal digital assistant (PDA), a portable multimedia player (PMP), a moving picture experts group layer-3 (MP3) player, a mobile medical device, a camera, a wearable device, a virtual reality (VR) device, and an augmented reality (AR) device.

According to an embodiment, the electronic device 501 may include a processor 520 (e.g., the processor 120 of FIG. 1 and the processor 203 of FIG. 2), memory 530 (e.g., the memory 130 of FIG. 1 and the memory 207 of FIG. 2), an input module 591 (e.g., the input module 150 of FIG. 1 and the microphone 206 of FIG. 2), a sound output module 593 (e.g., the sound output module 155 of FIG. 1 and the speaker 205 of FIG. 2), a display module 595 (e.g., the display module 160 of FIG. 1 and the display module 204 of FIG. 2), and an antenna module 597 (e.g., the antenna module 197 of FIG. 1). A first signal processing module 541, a second signal processing module 545, a Tx mixer 543, an Rx mixer 547, and a translation service 550 may be ones that are executable by the processor 520, and may be configured as at least one of a program code, an application, an algorithm, a routine, a set of instructions, or an AI learning model, which includes instructions that may be stored in the memory 530. "Tx" and "Rx" described herein may represent "transmit" or "transmission" and "receive" or "reception," respectively. At least one of the first signal processing module 541, the second signal processing module 545, the Tx mixer 543, the Rx mixer 547, or the translation service 550 may be implemented in hardware and/or a combination of hardware and software.

According to an embodiment, the memory 530 may include one or more memories. The instructions stored in the memory 530 may be stored in one of the memories. The instructions stored in the memory 530 may be distributed and stored in the memories. The instructions stored in the memory 530 may be executed by the processor 520, individually or collectively, to cause the electronic device 501 to perform and/or control a method of outputting a synthetic speech based on a TTS conversion during an in-call translation, which is described with reference to FIGS. 5 through 13.

According to an embodiment, the processor 520 may be implemented as circuitry (e.g., processing circuitry), such as, a system on chip (SoC) or an integrated circuit (IC). The processor 520 may include one or more processors. For example, the processor 520 may include a combination of one or more processors, such as, a CPU, GPU, MPU, AP, and CP. The instructions stored in the memory 530 may be executed individually or collectively by one or more processors to cause the electronic device 501 to perform and/or control the method of outputting a synthetic speech based on a TTS conversion during an in-call translation, which is described with reference to FIGS. 5 through 13. The instructions stored in the memory 530 may be executed individually or collectively by a plurality of processors to cause the electronic device 501 to perform and/or control the method of outputting a synthetic speech based on a TTS conversion during an in-call translation, which is described with reference to FIGS. 5 through 13.

According to an embodiment, the electronic device 501 may perform a transmit-receive process (Tx-Rx process), or a call transmitting-receiving process, for a call with an external electronic device (e.g., the external electronic device 601 of FIG. 5). The transmit-receive process may include a Tx process (or a call-transmitting process) for processing a speech signal from an utterance (or speech) received by the input module 591 (e.g., a microphone) and an Rx process (or a call-receiving process) for receiving and processing a speech signal from an utterance (or speech) from the external electronic device.

According to an embodiment, the Tx process may process a speech signal through the first signal processing module 541, the translation service 550, and the Tx mixer 543. The input module 591 may receive a speech signal corresponding to a speech uttered in a first language. The first signal processing module 541 may perform signal processing on the speech signal received from the input module 591. The first signal processing module 541 may perform signal processing on the speech signal using at least one of the following: microphone array processing (MAP), adaptive echo cancellation (AEC), noise suppression (NS), and automatic gain control or adaptive gain control (AGC). The translation service 550 may receive the speech signal (e.g., an intermediate speech signal and/or full speech signal) processed by the first signal processing module 541 in real time, convert it into a text in the first language, and translate the text in the first language into a second language. The translation service 550 may convert a result of the translation into the second language into a speech signal in the second language. The Tx mixer 543 may mix the speech signal (e.g., an intermediate speech signal in the first language and/or a full speech signal in the first language) processed by the first signal processing module 541 and the speech signal in the second language at a set mixing ratio to generate a single output signal (e.g., an output audio signal). The output signal may be transmitted, via the antenna module 597, to the external electronic device (e.g., the external electronic device 601 of FIG. 5) with which the electronic device 501 performs a call. In this case, the mixing ratio may be x:y, where x+y satisfies 1, and x and y are configurable. For example, the mixing ratio may include 1:0 and 0:1 (e.g., when only one signal is output).

According to an embodiment, in the Tx process, a result from the processing of the translation service 550 may be displayed via the display module 595. For example, a result obtained as a speech signal (e.g., an intermediate speech signal and/or full speech signal in the first language) processed by the first signal processing module 541 is converted into a text in the first language in real time and a result obtained as the text in the first language is translated into the second language may be displayed via the display module 595.

According to an embodiment, the Rx process may process a speech signal through the second signal processing module 545, the translation service 550, and the Rx mixer 547. The antenna module 597 may receive a speech signal corresponding to a speech uttered in the second language from the external electronic device (e.g., the external electronic device 601 of FIG. 5) with which the electronic device 501 performs a call. The second signal processing module 545 may perform signal processing on the speech signal received from the antenna module 597. The second signal processing module 545 may perform signal processing on the speech signal using at least one of NS or AGC. The translation service 550 may receive the speech signal (e.g., an intermediate speech signal and/or full speech signal) processed by the second signal processing module 545 in real time, convert it into a text in the second language, and translate the text in the second language into the first language. The translation service 550 may convert a result of the translation into the first language into a speech signal in the first language. The Rx mixer 547 may mix the speech signal (e.g., an intermediate speech signal in the second language and/or a full speech signal in the second language) processed by the second signal processing module 545 and the speech signal in the first language at a set mixing ratio to generate a single output signal (e.g., an output audio signal). The output signal may be output to the user of the electronic device 501 via the sound output module 593 (e.g., a speaker). In this case, the mixing ratio may be x:y, where x+y satisfies 1, and x and y are configurable. For example, the mixing ratio may include 1:0 and 0:1 (e.g., when only one signal is output).

According to an embodiment, in the Rx process, a result processed by the translation service 550 may be displayed via the display module 595. For example, a result obtained as a speech signal (e.g., an intermediate speech signal and/or full speech signal in the second language) processed by the second signal processing module 545 is converted into a text in the second language in real time and a result obtained as the text in the second language is translated into the first language may be displayed via the display module 595.

According to an embodiment, the electronic device 501 may process the Tx process and the Rx process in various ways. For example, the electronic device 501 may sequentially perform the processes by performing the Tx process and then the Rx process according to an input order of speech signals. Alternatively, when receiving a speech signal from the external electronic device (e.g., the external electronic device 601 of FIG. 5) while processing the Tx process, the electronic device 501 may process the Rx process after processing the Tx process or may process the Rx process simultaneously (or in parallel) with the Tx process. Alternatively, when receiving a speech signal from the user of the electronic device 501 while processing the Rx process, the electronic device 501 may process the Tx process after processing the Rx process or may process the Tx process simultaneously (or in parallel) with the Rx process. When processing the Tx process and the Rx process simultaneously, the electronic device 501 may simultaneously display a processing result (e.g., an ASR result, a translation result, and the indicator 640) from the Tx process and a processing result (e.g., an ASR result, a translation result, and the indicator 640) from the Rx process on the display module 595, and may display the two processing results separately.

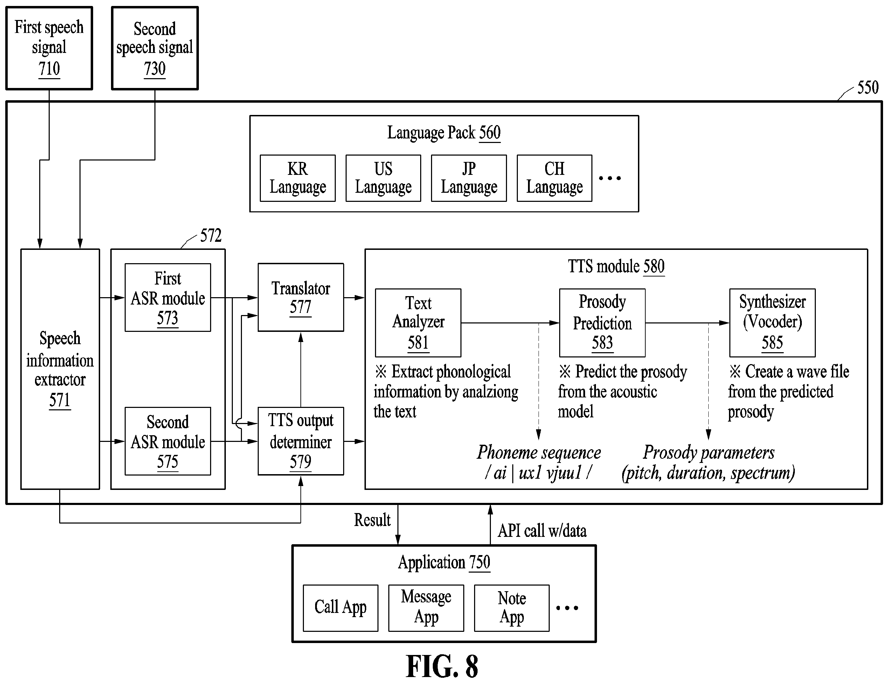

FIG. 8 is a schematic block diagram illustrating an example translation service according to an embodiment of the disclosure.

Referring to FIG. 8, according to an embodiment, the translation service 550 may be used for an application (e.g., a translation app) of the translation service 550 itself. The translation service 550 may also be used for an application 750 that requires the translation service 550. The application 750 may include one or more applications (e.g., an application that may use the translation service 550, such as, for example, a call app, a message app, a note app, a video conferencing app, a recording app, a chat app, etc.) running on the electronic device 501. The application 750 may use an application programming interface (API) to transmit and receive information to use the translation service 550. For example, the application 750 may call the API to use a real-time translation service.

According to an embodiment, a first speech signal 710 and/or a second speech signal 730 may be processed through the translation service 550. The first speech signal 710 may be a signal that is obtained as a speech uttered in a first language by a user (e.g., a first user) of the electronic device 501 is received by the input module 591 of the electronic device 501 and is then processed. For example, the first speech signal 710 may include a speech signal (e.g., an intermediate speech signal and/or full speech signal) processed by the first signal processing module 541 in the Tx process. The second speech signal 730 may be a signal that is obtained as a speech uttered in a second language by a user (e.g., a second user) who is on a call with the first user of the electronic device 501 using an external electronic device (e.g., the external electronic device 601) is received by the antenna module 597 of the electronic device 501 and is then processed. The second speech signal 730 may include a speech signal (e.g., an intermediate speech signal and/or full speech signal) processed by the second signal processing module 545 in the Rx process.

According to an embodiment, the translation service 550 may include a language pack 560. The translation service 550 may include a speech information extractor 571, an ASR module 572, a translator 577, a TTS output determiner 579, and a TTS module 580.

According to an embodiment, the language pack 560 may support languages for a real-time translation service provided by the translation service 550. The user may select a language to be used by the first user (e.g., a call transmitter) and a language to be used by the second user (e.g., a call receiver) to use the real-time translation service during a call. The user may also select a language to be used based on people stored in the contacts and/or address book of the electronic device 501. The user may set a language to be used from a settings screen. For example, in a case where the user (e.g., a Korean-speaking user) is to use an "in-call real-time translation" service when the user receives a call from Jane (e.g., an English-speaking user), the user may set a language for Jane to English → Korean and a language for the user to Korean → English. In this case, the language pack 560 may store the supported languages and download a new one if none is available. The language pack 560 may include the speech information extractor 571, the ASR module 572 (e.g., a first ASR module 573 and a second ASR module 575), the translator 577, the TTS output determiner 579, and the TTS module 580 to be used in accordance with the languages set for the first user (e.g., the call transmitter) and the second user (the call receiver) conducting the call.

According to an embodiment, the speech information extractor 571 may extract speech information from the speech signal 710 or 730. The speech information extractor 571 may receive the speech signal 710 or 730 in real time, extract the speech information from the speech signal 710 or 730, and output, to the ASR module 572, the speech signal 710 or 730 along with the extracted speech information in real time. The speech information extractor 571 may also output the extracted speech information to the TTS output determiner 579.

According to an embodiment, the speech information extractor 571 may extract the speech information from the speech signal 710 or 730 through various methods, such as, for example, voice activity detection (VAD) and/or end point detection (EPD). For example, the speech information may be determined through signal processing or statistical pattern recognition (classification) using acoustic information or feature information (e.g., information such as zero-crossing rate, energy, Mel-frequency cepstral coefficient (MFCC), and pitch) of the speech signal. The speech information may include a combination of at least one of the following: information about a speech section, information about a pause section, utterance start point, utterance time information (e.g., utterance start point information and utterance end point information), intonation information (e.g., high and/or low pitch information), and ASR end point.

According to an embodiment, the speech information extractor 571 may determine a speech section (e.g., a speech signal section) on which ASR decoding is to be performed through the VAD and/or EPD, and may determine a pause section (e.g., pause information and a pause indicator) in which silence is present. The pause (or rest) section may include a silence section. The pause section may include long silence (or a long silence section), short silence (or a short silence section), short pause (or a short pause section), and/or a long pause section, which are determined by a length of time during which the silence exists.

According to an embodiment, the pause section may be determined before the ASR decoding operation is performed. For example, the speech information extractor 571 may measure the energy of a frame of about a 10 milliseconds (msec) unit and, when a frame with energy lower than a baseline occurs for about 500 msec consecutively, may determine this to be a pause section (e.g., short pause).

According to an embodiment, the pause section may be determined by the ASR module 572 during the ASR decoding operation. The pause section may be determined as one of the units (e.g., phonemes, syllables, or N-gram thereof) determined during ASR decoding. In this case, information of the pause section may be further included in the speech information.

According to an embodiment, the speech information extractor 571 may be implemented in the ASR module 572.

According to an embodiment, the ASR module 572 may perform ASR (e.g., ASR decoding) on the speech signal 710 or 730 received in real time using the speech information extracted in real time. For example, the ASR module 572 may perform ASR decoding (e.g., first-pass and second-pass decoding) on a speech signal from an utterance start point to a point at which a pause section occurs. Similarly, the ASR module 572 may perform ASR decoding on a speech signal from the pause section to a point at which another pause section occurs, or on a speech signal from the pause section to a detected utterance end point.

According to an embodiment, the ASR module 572 may be implemented with various algorithms (e.g., a hidden Markov model (HMM), a weighted finite-state transducer (WFST), an artificial neural network (ANN), and a support vector machine (SVM)). For example, the ASR module 572 may be implemented as an ANN. The ANN may use, as non-limiting examples, an RNN, long short-term memory (LSTM), or a transformer, and it is not limited to any model type. It may also be implemented in the form of an end-to-end (E2E) model in which acoustic, pronunciation, and language models are implemented as a single network. For example, such an ANN model as an RNN transduction (RNN-T) model, a listen, attend, and spell (LAS) model, and a transformer-based conformer (ConformerT) may be used for E2E ASR. The ASR module 572 may be implemented as a streaming ASR module that may output an intermediate recognition result during an input of an utterance from a user through ANN-based ASR.

According to an embodiment, the ASR module 572 may use multi-pass decoding to reduce recognition result output latency and improve speech recognition performance. For example, the ConformerT method including two-pass decoding may generate a first plurality of candidate results (hypotheses) based on a ConformerT neural-net model in the first-pass, and rescore (e.g., lattice rescoring and N-best reranking) the plurality of candidate results to determine and output a final result in the second-pass. This is provided as one example of multi-pass decoding, and embodiments of the disclosure are not limited thereto. For example, during the first-pass operation, an optimal first result based on a plurality of candidate results may be output first, and then be modified and output as a final result after the second-pass decoding operation.

According to an embodiment, the ASR module 572 may include one or more ASR modules. For example, the ASR module 572 may have one or more ASR modules based on the number of users (e.g., the call transmitter and the call receiver) conducting a call and/or languages they speak. The ASR module 572 may include the first ASR module 573 and the second ASR module 575. The first ASR module 573 may perform ASR on the speech signal 710, and the second ASR module 575 may perform ASR on the speech signal 730. The first ASR module 573 may support the first language of the first user (e.g., the call transmitter), and the second ASR module 575 may support the second language of the second user (e.g., the call receiver). The first ASR module 573 may perform ASR on the speech signal 710 in the first language to convert it into a text in the first language. The second ASR module 575 may perform ASR on the speech signal 730 in the second language and convert it into a text in the second language.

According to an embodiment, the translator 577 may receive a result of performing ASR from the ASR module 572 and translate the result of performing the ASR into a target language based on the languages supported by the ASR module 572. The result of performing the ASR may be a text that is output by the ASR module 572 after ASR decoding is completed in real time. For example, in the case of two-pass decoding ASR, the result of performing the ASR may be a text that is output as both first-pass decoding and second-pass decoding are completed in real time, or may include a result obtained by the first-pass decoding and a final result obtained by the second-pass decoding.

According to an embodiment, in the case of two-pass decoding ASR, the translator 577 may translate a text that is output as both first-pass decoding and second-pass decoding are completed in real time, and a translation result obtained by the translation may be displayed via the display module 595. The translator 577 may perform a translation based on a result obtained by the first-pass decoding, and an initial translation result from the translation may be displayed via the display module 595. Once a final ASR result obtained by the second-pass decoding is generated, the translator 577 may translate this result, and a final translation result from the translation may be displayed, replacing the initial translation result, via the display module 595. In this case, the translation results may all be displayed via the display module 595 in real time. Alternatively, the initial translation result or a temporary translation result may not be displayed via the display module 595, and only the final translation result may be displayed via the display module 595. Displaying the translation results via the display module 595 may be configurable by a user (e.g., the user of the electronic device 501).

According to an embodiment, the translator 577 may receive a result (e.g., a text in the first language) of performing the ASR from the first ASR module 573 and translate the result of the ASR into the second language (e.g., a text in the second language). The translator 577 may also receive a result (e.g., a text in the second language) of performing the ASR from the second ASR module 575 and translate the result of the ASR into the first language (e.g., a text in the first language).

According to an embodiment, the TTS output determiner 579 may receive a result (e.g., a text being converted during the ASR) of performing the ASR from the ASR module 572. The TTS output determiner 579 may receive speech information (e.g., information about a short pause section, utterance start point, utterance end point, and ASR end point) in real time. The speech information may be received directly from the speech information extractor 571, may be extracted by the speech information extractor 571 and received via the ASR module 572, or may be extracted and received by the ASR module 572 having a speech information extraction function (e.g., the speech information extractor 571). The speech information may include information about a portion of the speech signal 710 or 730 that corresponds to a result of performing the ASR, rather than the entirety of the speech signal 710 or 730.

According to an embodiment, using a text (e.g., partial text) converted during the ASR and the speech information, when a section in the text in which the ASR no longer changes is determined, the TTS output determiner 579 may determine to output a result by performing a TTS conversion on a translation result (e.g., a final translation result) from a translation performed up to a point corresponding to the section. For example, the TTS output determiner 579 may control the TTS module 580 to output the result by performing the TTS conversion on the final translation result because the ASR output has not changed any longer. In a case where two-pass decoding is performed on a pause-by-pause basis, the TTS output determiner 579 may determine whether to perform the TTS conversion on the final translation result based on at least one of a pause point, an utterance start/end point, and an ASR end point.

According to an embodiment, the TTS output determiner 579 may identify an end point of a sentence (e.g., a complete sentence) in a text converted during the ASR, based on a pause section (e.g., a short pause section and/or EPD) in the text. The TTS output determiner 579 may identify an end point of a sentence included in a text to separate the sentence, as a complete sentence, from the text (i.e., segment the text into sentences (e.g., complete sentences)). The TTS output determiner 579 may separate a complete sentence from a text, that is, segment a text into complete sentences. The TTS output determiner 579 may determine to output a result by performing a TTS conversion on the sentence based on a point at which the end point of the sentence is identified from the text converted during the ASR based on the pause section in the text. In this case, the point at which an end point of a sentence is identified may include a point that separates a complete sentence from a text. The TTS output determiner 579 may control the TTS module 580 to output a result by performing the TTS conversion on the sentence. The TTS output determiner 579 may determine to output a result by performing a TTS conversion on a sentence at each point that separates an end point of each sentence from the text. The TTS output determiner 579 may control the TTS module 580 to output a result by performing the TTS conversion on a sentence each time when an end point of each sentence is identified from the text.

According to an embodiment, the TTS output determiner 579 may identify an end point of a sentence (e.g., a complete sentence) in a text converted during the ASR, based on a combination of at least one of information about a pause section, incoming token information after the pause section, or punctuation information (or punctuation mark information). The TTS output determiner 579 may separate a complete sentence from a text converted during the ASR, based on a combination of at least one of information about a pause section, incoming token information after the pause section, or punctuation information. The TTS output determiner 579 may analyze a text being obtained during the ASR and determine which section (or segment) of the text is a "sentence" and which is not. Alternatively, the TTS output determiner 579 may determine where to break down consecutive incoming sentences. The TTS output determiner 579 may separate a sentence (e.g., a complete sentence) from a text, that is, segment the text into complete sentences. The TTS output determiner 579 may determine whether it is a "sentence" or not based on a pause section in a text or incoming token information after the pause section, or determine whether it is a complete sentence connected to a next sentence based on the incoming token information; predict a (punctuation) mark such as a "period," an "exclamation mark," or a "question mark"; and separate a complete sentence from the text. The TTS output determiner 579 may also analyze a question mark based on intonation information, such as, low pitch and high pitch. For example, the TTS output determiner 579 may predict whether a sentence is punctuated with a period or a question mark at the end of the sentence based on intonation information from, for example, " 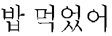 ." (translated in English, "I ate.") and " 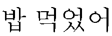 ?" (translated in English, "Did you eat?"). The TTS output determiner 579 may transmit, to the translator 577, the predicted punctuation information along with the complete sentence as text information. In addition to the complete sentence including the predicted punctuation information, the TTS output determiner 579 may also output speech information (e.g., including intonation information such as low and high pitches) to the translator 577. The translator 577 may then translate a portion of the text corresponding to the sentence based on the identified end point of the sentence included in the text. The translator 577 may translate a result (e.g., a complete sentence including a punctuation mark) received from the TTS output determiner 579 and transmit a translation result obtained by the translation to the TTS module 580. The translator 577 may translate an ASR result obtained by performing the ASR, which is received from the ASR module 572, and/or a result (e.g., a complete sentence including a punctuation mark) received from the TTS output determiner 579. A translation result obtained by translating the ASR result received from the ASR module 572 may be a temporary translation result, and a translation result obtained by translating the result (e.g., the complete sentence including the punctuation mark) received from the TTS output determiner 579 may be a final translation result. The temporary translation result and the final translation result may be displayed on the display module 595 in real time. Alternatively, the temporary translation result may be displayed first on the display module 595, and the final translation result may then be displayed, replacing the temporary translation result, on the display module 595. Alternatively, only the final translation result may be displayed on the display module 595, with the temporary translation result not displayed on the display module 595. For example, when a single sentence is separated from a text, only a final translation result obtained by translating the sentence on a sentence-by-sentence basis may be displayed on the display module 595. In this case, displaying a translation result via the display module 595 may be configurable by a user (e.g., the user of the electronic device 501).

According to an embodiment, the TTS output determiner 579 may transmit the text information (e.g., the predicted punctuation information and the complete sentence) and/or control information to the TTS module 580. The control information may be to control the TTS module 580 to output a result by performing a TTS conversion on a complete sentence. The TTS module 580 may generate and output a synthetic speech from a text corresponding to a complete sentence translated by the translator 577 under the control of the TTS output determiner 579. The text information output from the TTS output determiner 579 to the TTS module 580 may also serve as the control information.

According to an embodiment, the TTS module 580 may receive a translated text (e.g., a text translated into the second language and/or a text translated into the first language) corresponding to a complete sentence from the translator 577, and may generate and output a synthetic speech from a text received through a text analyzer 581, a prosody predictor 583, and a vocoder (or synthesizer) 585. The TTS module 580 may generate and output the synthetic speech from the translated text corresponding to the complete sentence received from the translator 577 under the control of the TTS output determiner 579. The synthetic speech generated by the TTS module 580 may correspond to a portion of the speech signal 710 or the speech signal 730, and the TTS module 580 may output the synthetic speech while an utterance (or speech) corresponding to the speech signal 710 or the speech signal 730 continues without being finished. For example, in a situation where a full speech (or utterance) corresponding to the speech signal 710 or the speech signal 730 is not finished, but a complete sentence is determined as a punctuation mark (e.g., a punctuation mark such as a period, comma, exclamation mark, question mark, etc.) is detected in a portion (e.g., a partial speech (or utterance)) of the full speech, a synthetic speech corresponding to the complete sentence may start being played before the end of the full speech (i.e., EPD). In Tx process, the synthetic speech may be transmitted to the external electronic device (e.g., the external electronic device 601) that is on a call. In the Rx process, the synthetic speech may be output to the user of the electronic device 501 via the sound output module 593 (e.g., a speaker).

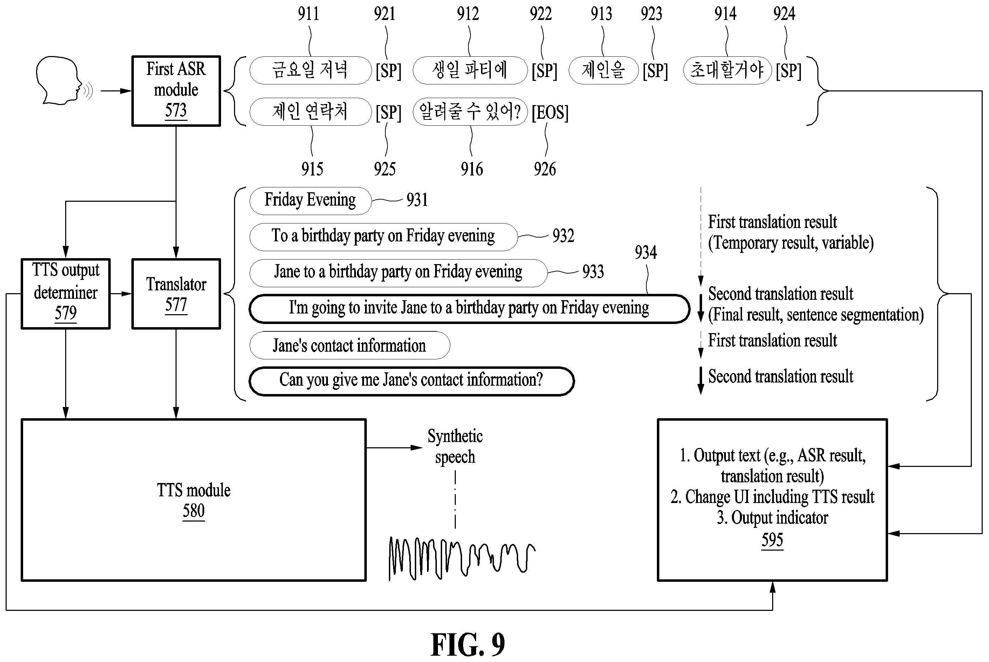

FIG. 9 is a diagram illustrating an example method of determining a TTS output during an in-call translation according to an embodiment of the disclosure.

In the example of FIG. 9, assumed is a Tx process in which a user of the electronic device 501 utters a speech " 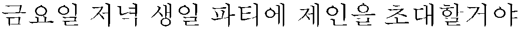 . 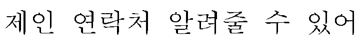 ?" and the speech is processed. A speech signal corresponding to the speech uttered by the user " 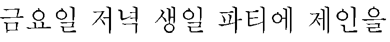 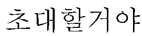 . 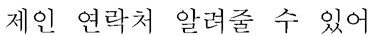 ?" may undergo signal processing performed by a signal processing module (e.g., the first signal processing module 541 of FIG. 6) and may then be input to an ASR module (e.g., the first ASR module 573 of FIG. 8).

The first ASR module 573 may perform ASR (e.g., ASR decoding) on an incoming speech signal in real time. When the ASR is completed, the first ASR module 573 may output, as an ASR result of performing the ASR, partial texts " 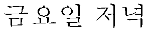 " 911, " 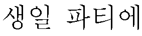 " 912, " 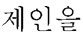 " 913, and " 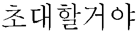 " 914 sequentially to the translator 577 and the TTS output determiner 579. The first ASR module 573 may also sequentially output " 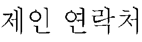 " 915 and " 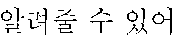 ?" 916 to the translator 577 and the TTS output determiner 579. Alternatively, the first ASR module 573 may sequentially output partial texts " 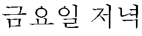 ," " 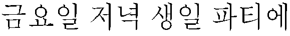 ," " 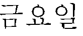 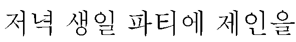 ," and " 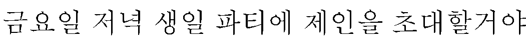 " to the translator 577 and TTS output determiner 579, as the ASR is completed.

The first ASR module 573 may output speech information, along with ASR results, to the TTS output determiner 579. The speech information may be extracted by the speech information extractor 571 or may be extracted by the first ASR module 573 during the ASR decoding. The first ASR module 573 may transmit, to the TTS output determiner 579, pause section information (e.g., [SP] and [EOS]) along with text information. For example, the first ASR module 573 may transmit, to the TTS output determiner 579, information about a pause section (e.g., [SP] 921) between " 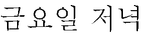 " 911 and " 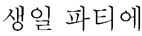 " 912, information about a pause section (e.g., [SP] 922) between " 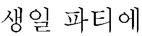 " 912 and " 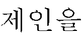 " 913, information about a pause section (e.g. [SP] 923) between " 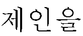 " 913 and " 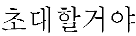 " 914, information about a pause section (e.g., [SP] 924) between " 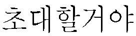 " 914 and " 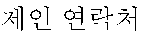 " 915, information about a pause section (e.g., [SP] 925) between " 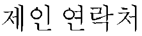 " 915 and " 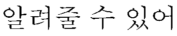 ?" 916, and information about a pause section (e.g., [EOS] 926) after " 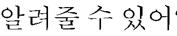 ?" 916, along with the text information. Although it may be preferable for EPD to detect [EOS] after " 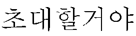 " 914, the EPD may fail to detect [EOS] if there is not enough pause in the speech (or utterance).

The TTS output determiner 579 may determine a point at which a sentence no longer changes based on a text (e.g., partial texts), which is an ASR result, and speech information (e.g., pause section information and intonation information).

For example, when an ASR result is accompanied by an EOS result, the TTS output determiner 579 may determine that a speech uttered by the user has ended, and may request the TTS module 580 to output a result by performing a TTS conversion on a translation of the ASR result.

For another example, when the ASR result includes short pause information (e.g., [SP]) as the pause section information, the TTS output determiner 579 may analyze a text before a point corresponding to SP and determine it as a single complete sentence. The TTS output determiner 579 may perform operations, such as, sentence separation (or segmentation) and punctuation prediction (or punctuation insertion). A complete sentence described herein may be defined as a sentence that has a grammatical and semantic structure sufficient to be translated. The punctuation prediction operation (or punctuation insertion operation) may determine at what point, in a sentence, a punctuation mark (e.g., a period, comma, question mark, or exclamation mark) may be inserted, and the determined (predicted) point of a punctuation mark may be used to determine a complete sentence. The TTS output determiner 579 may analyze a text from a point at which a pause section (e.g., [SP] 921) is present to a point at which a pause section (e.g., [EOS]) is present, and determine it as a complete sentence. The TTS output determiner 579 may determine that a text (e.g., " 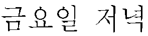 " 911, " 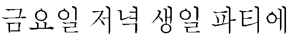 " 911 and 912, or " 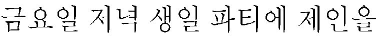 " 911 to 913) before a point at which a pause section (e.g., [SP] 921, [SP] 922, or [SP] 923) is present is not a single complete sentence. The TTS output determiner 579 may determine that a punctuation mark (e.g., a period) is insertable into a point of " 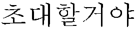 " 914 in a text " 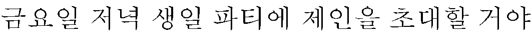 " 911 to 914 before a point at which a pause section (e.g., [SP] 924) is present, and may determine " 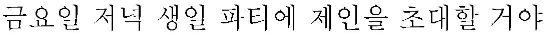 " 911 to 914 as a single complete sentence. When determining, as a complete sentence, an incoming sentence before SP, the TTS output determiner 579 may request the TTS module 580 to output a result by performing a TTS conversion on a translation of the determined complete sentence.

Until the TTS output determiner 579 requests the TTS module 580 to output the result of the TTS conversion, the display module 595 may display a text (e.g., " 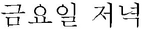 " 911, " 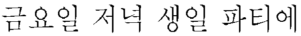 " 911 and 912, " 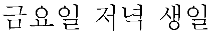 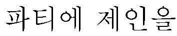 " 911 to 913, and " 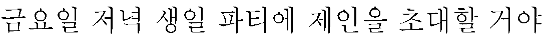 " 911 to 914) converted by the first ASR module 573 and a text (e.g., "Friday Evening" 931, "To a birthday party on Friday evening" 932, "Jane to a birthday party on Friday evening" 933, and "I'm going to invite Jane to a birthday party on Friday evening" 934) translated by the translator 577, together in real time. In this case, results displayed on the display module 595 may include a temporary result (e.g., " 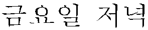 " 911, " 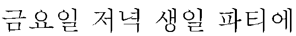 " 911 and 912, and " 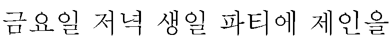 " 911 to 913) that changes as the first ASR module 573 continues outputting ASR results through streaming, and/or a final result (e.g., " 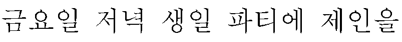 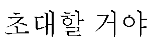 " 911 to 914). A point at which the TTS output determiner 579 requests the TTS module 580 to output a result of a TTS conversion may be a point at which an ASR result and/or translation result (e.g., a translation of the ASR result) does not change any longer. At the point of requesting the TTS module 580 to output a result of a TTS conversion, an indicator (e.g., UI) (e.g., the indicator 640 of FIG. 5) related to the output of the TTS conversion may be generated and displayed on the display module 595. The indicator may be provided to control an output of a synthetic speech generated by the TTS conversion, and the user may control the output of the synthetic speech via the indicator. The indicator may include functions for controlling the speed (e.g., speed at which the speech is output), volume, play, and stop of sound of the synthetic speech. The indicator may further include a function for controlling the output of a signal obtained by mixing the synthetic speech and the speech signal. When the TTS output determiner 579 separates a complete sentence, a synthetic speech obtained by performing, by the TTS module 580, a TTS conversion on a result of translating the complete sentence may be automatically output (e.g., to the external electronic device 601 and/or the sound output module 593), or may be manually output in response to a user input via the indicator.

In a case where the first ASR module 573 supports two-pass decoding, the first ASR module 573 may also output temporary ASR results (e.g., " 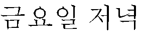 " 911, " 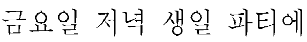 " 911 and 912, and " 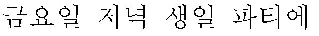 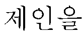 " 911 to 913) even while the first ASR module 573 is performing first-pass decoding, through streaming. In this case, the translator 577 may perform a translation based on the temporary ASR results (e.g., " 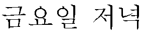 " 911, " 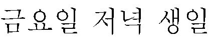 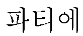 " 911 and 912, and " 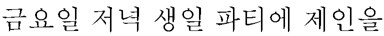 " 911 to 913) to obtain temporary translation results (e.g., "Friday Evening" 931, "To a birthday party on Friday evening" 932, and "Jane to a birthday party on Friday evening" 933). The temporary translation results may be continuously updated and output to the display module 595. Even if the first ASR module 573 performs second-pass decoding up to an SP point and determines a final ASR result, a translation result obtained by the translator 577 may not be final. A complete sentence determined by the sentence separation (or segmentation) operation may include an ASR recognition unit including a plurality of SPs. Alternatively, the ASR recognition unit including the SPs may include a plurality of complete sentences.

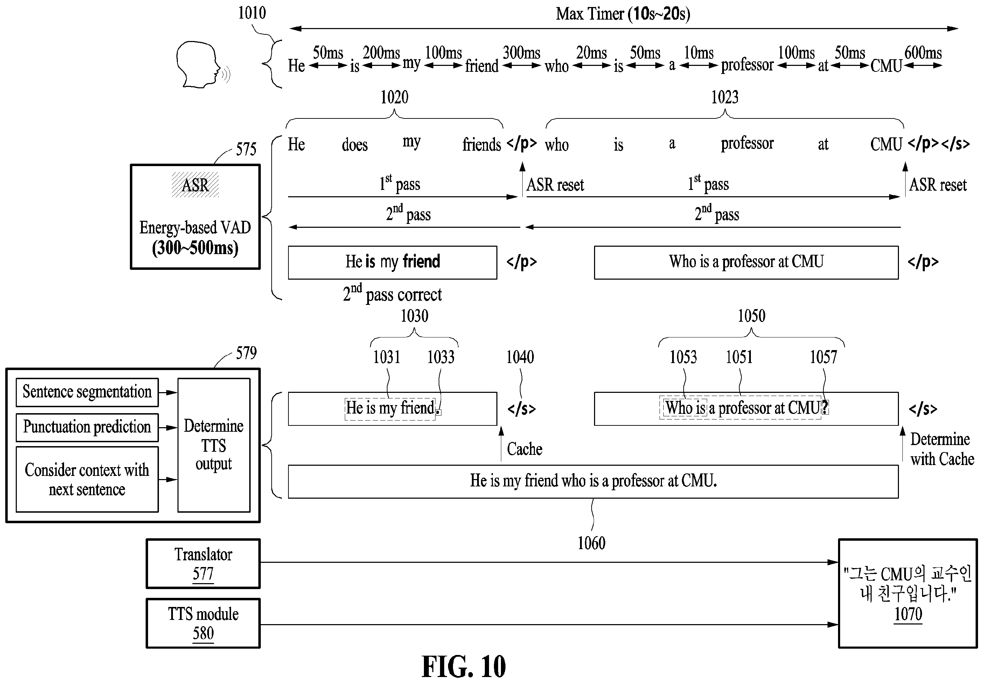

FIG. 10 is a diagram illustrating an example method of determining a TTS output during in-call translation according to an embodiment of the disclosure.

In the example of FIG. 10, assumed is an Rx process in which the electronic device 501 receives and processes a speech "He is my friend who is a professor at CMU." 1010 uttered by a user of the external electronic device 601. A speech signal of the speech "He is my friend who is a professor at CMU." 1010 uttered by the user may be processed by a signal processing module (e.g., the second signal processing module 545 of FIG. 6) and input to an ASR module (e.g., the second ASR module 575 of FIG. 8).

The second ASR module 575 may analyze an incoming speech signal in real time and convert it into a text. The second ASR module 575 may sequentially output a sentence "He does my friends" 1020 as a result of first-pass decoding and may output, in place of the first-pass decoding result, a sentence "He is my friend" 1031 finally recognized as a result of second-pass decoding. The second ASR module 575 may correct "He does my friends" 1020 in the second-pass decoding to output "He is my friend" 1031.

Based on incoming token information after a pause section, the TTS output determiner 579 may further consider a context with a next sentence to determine a point for performing a TTS conversion and outputting a result therefrom.

For example, the TTS output determiner 579 may segment a sentence by checking up to N words or token information received after a short pause point (e.g., </s> or </p> 1040), along with the second-pass decoding result (e.g., "He is my friend" 1031) transmitted from the second ASR module 575. For example, N may be a natural number greater than or equal to 1, which may be configurable.

The TTS output determiner 579 may determine that "He is my friend" 1030" in "He is my friend who is a professor at CMU." 1060 is a complete sentence based on the sentence segmentation operation, but may further determine whether to segment a complete sentence based further on two (N=2) incoming token information "who is" 1053. In this case, "who is" 1053 may be a result of first decoding in a second ASR decoding section (e.g., a section performing ASR decoding on "who is a professor at CMU" 1023). For example, because the two token information "who is" 1053 may form a single sentence as it comes behind "He does my friends," the TTS output determiner 579 may not determine an output of a TTS conversion but may wait for a subsequent incoming short pause (e.g., </s> or </p> 1040) or EPD to determine a complete sentence section. The TTS output determiner 579 may determine whether a sentence is complete or whether to break down a sentence even though the sentence is incomplete, and may request the TTS module 580 to perform a TTS conversion on a translation of an ASR result and output a result therefrom.

Additionally, the TTS output determiner 579 may use a cache to further consider the context with the next sentence after the pause section (e.g., </s> or </p> 1040).

For example, the TTS output determiner 579 may predict a punctuation mark as a period "." 1033 from "he is my friend." 1030 through punctuation prediction performed on a sentence "he is my friend" 1031 before the pause section (e.g., </s> or </p> 1040, which is a short pause), and may transmit such data to the cache to store it by the time of a subsequent ASR section (e.g., a section performing ASR decoding on "who is a professor at CMU" 1023) and may use it to separate a sentence based further on a context of a subsequent incoming sentence. When determined as a sentence itself, the subsequent incoming sentence may also be "Who is a professor at CMU" 1051 and may thus be added with a question mark "?" 1057. However, the TTS output determiner 579 may consider the context with the sentence (e.g., "He is my friend" 1031) previously stored in the cache to separate a complete sentence "He is my friend who is a professor at CMU." 1060; determine to perform a TTS conversion on a translation of this sentence and output a result therefrom; and request it from the TTS module 580. At a point from which a determination to perform the TTS conversion and output the result is made, a synthetic speech " 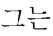 CMU 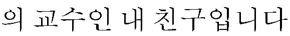 ." 1070, which is translated from "He is my friend who is a professor at CMU." 1060, may be output from the TTS module 580.

Additionally, the TTS output determiner 579 may separate (or segment) a sentence based on grammatical rules to consider a context with a subsequent incoming sentence. The following example assumes that the electronic device 501 receives a speech "He is my friend who is a professor at CMU. He is a smart guy." uttered by the user of the external electronic device 601 during a call. In a case where the user of the external electronic device 601 utters the speech "He is my friend <SP> who is a professor at CMU. He is a smart guy. <EOS>," the second ASR module 575 may decode "He is my friend <SP>" in a first ASR decoding section and decode "who is a professor at CMU. He is a smart guy. <EOS>" in a second ASR decoding section. The TTS output determiner 579 may predict a punctuation mark as a period "." (e.g., "he is my friend.") through punctuation prediction performed on a sentence "he is my friend" before a pause section and may store this data in a cache. The TTS output determiner 579 may segment "who is a professor at CMU. He is a smart guy." through a segmentation operation, and may merge "who is a professor at CMU." with the sentence (e.g., "He is my friend") stored in the cache based on a context with the sentence to determine a single complete sentence "He is my friend who is a professor at CMU." The TTS output determiner 579 may determine to perform a TTS conversion on a translation of "He is my friend who is a professor at CMU." and output a result thereof. Additionally, the TTS output determiner 579 may determine "He is a smart guy." as another complete sentence and determine to perform a TTS conversion on a translation of "He is a smart guy." and output a result thereof. The TTS module 580 may generate and output a synthetic speech for the translation of "He is my friend who is a professor at CMU." and then generate and output a synthetic speech for the translation of "He is a smart guy."

Additionally, after determining a sentence to be continued using subsequent incoming token information even if EPD is received, the TTS output determiner 579 may wait to determine a subsequent incoming sentence and perform segmentation, and determine to perform a TTS conversion on a translation of the segmented sentence and output a result thereof. In this case, during the wait, a mark "..." may be inserted into an ASR result, and be displayed on the display module 595. For example, in a case where the user utters a speech "I ate ... spaghetti yesterday," the TTS output determiner 579 may determine whether, even though EPD is received after "I ate," it is a sentence to be continued based on "spaghetti ~" that comes in subsequently, and may segment the sentence and determine to perform a TTS conversion on a translation of the segmented sentence and output a result thereof.

For example, a first pause section (e.g., short pause section) may be determined in a range of about 200ms to 500ms, and a second pause section (e.g., EPD time) may be determined in a range of about 500ms to 2sec. However, examples are not limited thereto.

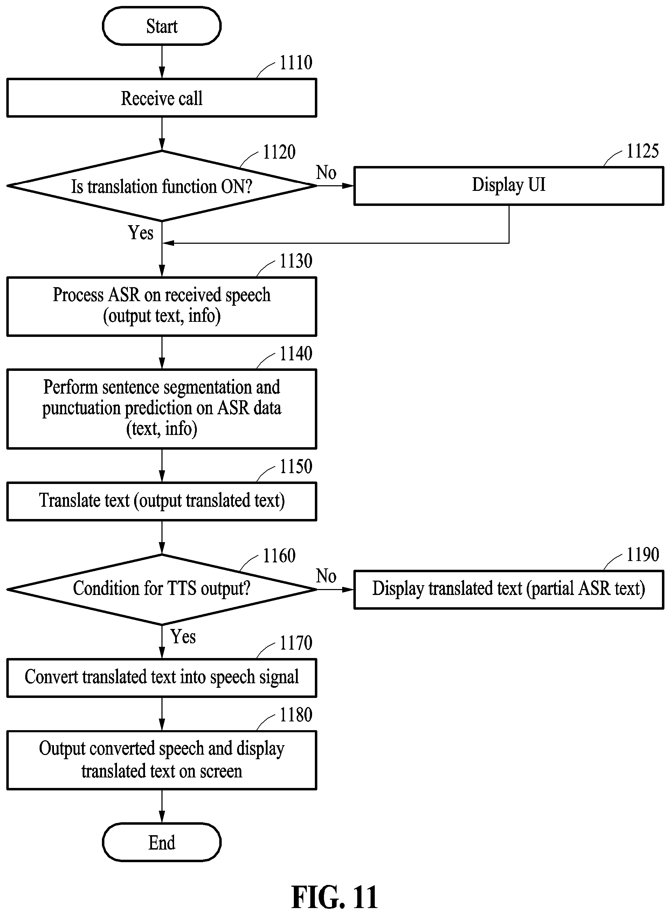

FIG. 11 is a flowchart illustrating an example method of operating an electronic device according to an embodiment of the disclosure.

The example of FIG. 11 relates to an Rx process in which the electronic device 501 processes a speech signal received from the external electronic device 601 during a call.

Operations 1110 through 1190 may be performed in sequential order but are not necessarily performed in sequential order. For example, the order of the operations 1110 through 1190 may be changed, and at least two of the operations may be performed in parallel.

When executed by the processor 520, instructions stored in the memory 530 of the electronic device 501 may cause the electronic device 501 to perform operations 1110 through 1190.

According to an embodiment, at operation 1110, the electronic device 501 may receive an incoming call from the external electronic device 601.

According to an embodiment, at operation 1120, in a case where there is an incoming call or an outgoing call from or to a predetermined person for an in-call translation, or a call to a new number is initiated, the electronic device 501 may check whether a translation service (e.g., the translation service 550) is turned on.

According to an embodiment, at operation 1125, in response to the translation service (e.g., the translation service 550) not turned on, the electronic device 501 may display a UI related to turning on the translation service (e.g., an in-call translation service) such that the user may turn on, from a screen, the translation service during the call.

According to an embodiment, at operation 1130, the electronic device 501 may perform ASR on a speech signal (e.g., a speech signal in a second language) received from the external electronic device 601. The electronic device 501 may extract speech information from the speech signal before and/or during the ASR. The speech information may include a combination of at least one of the following: information about a speech section, information about a pause section, an utterance start point, utterance time information (e.g., utterance start point information and utterance end point information), intonation information (e.g., high and/or low pitch information), and ASR end point.

According to an embodiment, at operation 1140, the electronic device 501 may perform sentence segmentation (or sentence classification) and/or punctuation prediction (e.g., determining a position of a period, a question mark, an exclamation mark, etc.) on a text based on an ASR result (e.g., a text in the second language obtained through a conversion during the ASR) obtained by performing the ASR and on the speech information. Based on this, the electronic device 501 may determine whether it is time to output a TTS result by performing a TTS conversion.

According to an embodiment, at operation 1150, the electronic device 501 may translate the ASR result (e.g., the text in the second language converted during the ASR), for example, into a first language. The electronic device 501 may translate incoming ASR results that are received in parallel or sequentially.

According to an embodiment, at operation 1160, the electronic device 501 may determine whether a condition for outputting a TTS synthetic speech is satisfied. The condition for outputting a TTS synthetic speech may be a condition in which a translation result no longer changes (e.g., a complete sentence), and the electronic device 501 may determine whether texts before "EOS" or "SP" are a sentence or not, or determine a time point to output a TTS result by performing a TTS conversion based on at least one incoming token information after EOS or SP.

According to an embodiment, at operation 1170, when the condition for outputting a TTS synthetic speech is satisfied, the electronic device 501 may convert (or synthesize) the translated text into a synthetic speech through the TTS conversion.

According to an embodiment, at operation 1180, when the synthetic speech is output, the electronic device 501 may change a displaying method for the previously displayed text and display the changed displaying method on the display module 595 to indicate the output of the synthetic speech. In this case, a UI may display an indicator (e.g., the indicator 640 of FIG. 5) on the display module 595 to control the display or the output of the synthetic speech by, for example, changing the color of a character of the text according to the timing of the synthetic speech or indicating a speed at which the synthetic speech is being output. However, examples are not limited thereto.

According to an embodiment, at operation 1190, when the condition for outputting a TTS synthetic speech is not satisfied, i.e., a sentence is not available for the output of a TTS synthetic speech, the electronic device 501 may display an ASR result and/or translated text sentence on the display module 595. In this case, a sentence or word displayed may be variable over time as the user speaks.

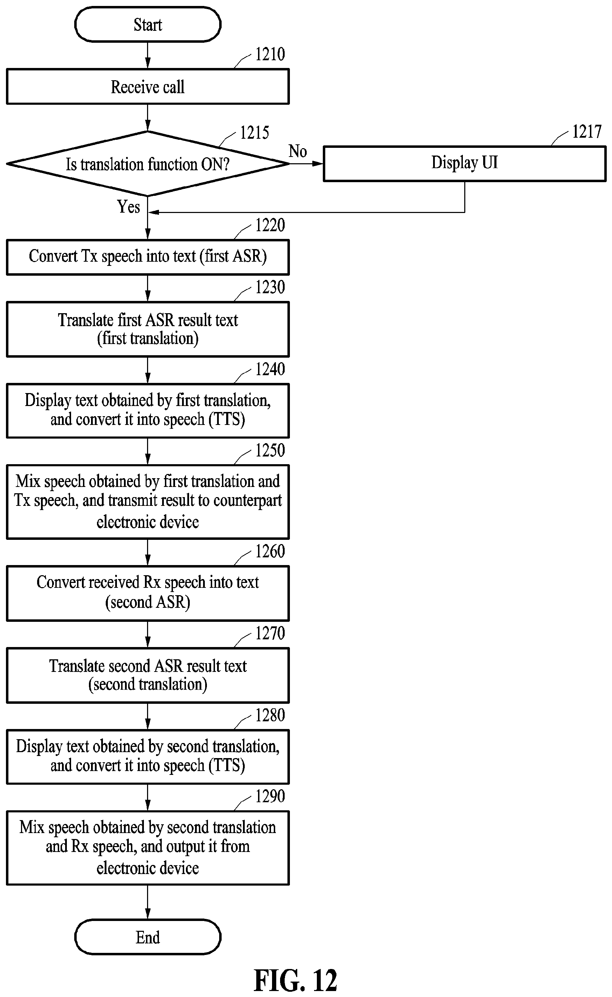

FIG. 12 is a flowchart illustrating an example method of operating an electronic device according to an embodiment of the disclosure.

Referring to FIG. 12, in a case where a user of the electronic device 501 and a user of the external electronic device 601 engage in a call, a Tx process of processing a speech signal from an utterance of the user of the electronic device 501 and an Rx process of processing a speech signal received from the external electronic device 601.

Operations 1210 through 1290 may be performed in sequential order but are not necessarily performed in sequential order. For example, the order of the operations 1210 through 1290 may be changed, and at least two of the operations may be performed in parallel.

When executed by the processor 520, instructions stored in the memory 530 of the electronic device 501 may cause the electronic device 501 to perform operations 1210 through 1290.

According to an embodiment, at operation 1210, the electronic device 501 may receive an incoming call from the external electronic device 601.

According to an embodiment, at operation 1215, in a case where there is an incoming call or an outgoing call from or to a predetermined person for an in-call translation, or a call to a new number is initiated, the electronic device 501 may check whether a translation service (e.g., the translation service 550) is turned on.

According to an embodiment, at operation 1217, when the translation service (e.g., the translation service 550) is not turned on, the electronic device 501 may display a UI related to turning on the translation service (e.g., an in-call translation service) such that the user may turn on, from a screen, the translation service during the call.

According to an embodiment, at operation 1220, the electronic device 501 may perform ASR on a Tx speech. For example, the electronic device 501 may perform the ASR on a speech signal from a speech in a first language uttered by the user (e.g., the user of the electronic device 501). The electronic device 501 may extract speech information from the speech signal before and/or during the ASR. The speech information may include a combination of at least one of the following: information about a speech section, information about a pause section, an utterance start point, utterance time information (e.g., utterance start point information and utterance end point information), intonation information (e.g., high and/or low pitch information), and ASR end point.

According to an embodiment, at operation 1230, the electronic device 501 may translate an ASR result (e.g., a text in the first language obtained through a conversion during the ASR) obtained by performing the ASR into a second language.

According to an embodiment, at operation 1240, the electronic device 501 may display a translation result obtained by the translation into the second language in real time on the display module 595; determine a point at which a complete sentence is separated from the text converted during the ASR to be a time point to output a TTS result by performing a TTS conversion; and perform the TTS conversion on a text (e.g., a text translated in the second language) corresponding to the complete sentence. The text converted during the ASR may also be displayed on the display module 595 along with a translation result obtained by the translation into the second language. The electronic device 501 may display, on the display module 595, an indicator (e.g., UI) for controlling an output of a synthetic speech generated by the TTS conversion.

According to an embodiment, at operation 1250, the electronic device 501 may mix the synthetic speech (e.g., a synthetic speech in the second language) with a speech signal (e.g., a speech signal of a portion corresponding to the synthetic speech) based on the speech of the user at a certain ratio and transmit a result or mixture obtained by the mixing to the external electronic device 601. The mixing operation may be implemented by a weighted sum of two speech signals. The mixing ratio may be changed by a user input. The mixing ratio may include, for example, 1:0 and 0:1. For example, the electronic device 501 may transmit only the speech signal based on the speech of the user or may transmit only the synthetic speech.

According to an embodiment, at operation 1260, the electronic device 501 may perform ASR on an Rx speech. For example, the electronic device 501 may perform the ASR on a speech signal based on a speech in the second language received from the external electronic device 601. The electronic device 501 may extract speech information from the speech signal before and/or during the ASR. The speech information may include a combination of at least one of the following: information about a speech section, information about a pause section, an utterance start point, utterance time information (e.g., utterance start point information and utterance end point information), intonation information (e.g., high and/or low pitch information), and ASR end point.

According to an embodiment, at operation 1270, the electronic device 501 may translate an ASR result (e.g., a text in the second language obtained through a conversion during the ASR) obtained by performing the ASR into the first language.

According to an embodiment, at operation 1280, the electronic device 501 may display a translation result obtained by the translation into the first language in real time on the display module 595; determine a point at which a complete sentence is separated from a text converted during the ASR to be a time point to output a TTS output by performing a TTS conversion; and perform the TTS conversion on a translated text (e.g., a text translated into the first language) corresponding to the complete sentence. The text being converted during the ASR may also be displayed on the display module 595 along with the translation result obtained by the translation into the first language. The electronic device 501 may display, on the display module 595, an indicator (e.g., UI) for controlling the output of a synthetic speech generated by the TTS conversion.

According to an embodiment, at operation 1290, the electronic device 501 may mix the synthetic speech (e.g., a synthetic speech in the first language) with a speech signal (e.g., a speech signal of a portion corresponding to the synthetic speech) based on the speech of the user at a certain ratio and transmit a result or mixture obtained by the mixing to the user of the electronic device 501 through the sound output module 593 (e.g., a speaker). The mixing operation may be implemented by a weighted sum of two speech signals. The mixing ratio may be changed by a user input. The mixing ratio may include, for example, 1:0 and 0:1. For example, the electronic device 501 may transmit only the speech signal based on the speech of the user or may transmit only the synthetic speech.

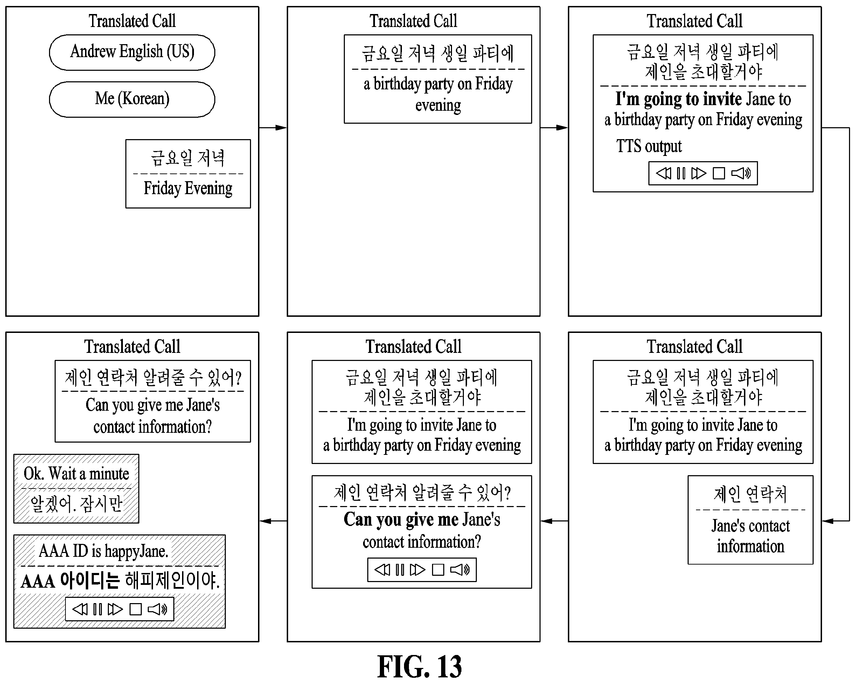

FIG. 13 is a diagram illustrating an example of what an electronic device displays to a user during a real-time translation according to an embodiment of the disclosure.

Referring to FIG. 13, assumed is a case where, during a call between a user of the electronic device 501 and a user of the external electronic device 601, the user of the electronic device 501 utters a first speech and then the user of the external electronic device 601 utters a second speech (e.g., a one-way call), or the user of the external electronic device 601 also utters the second speech while the user of the electronic device 501 is uttering the first speech (e.g., a two-way call).

The electronic device 501 may receive a speech " 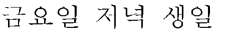 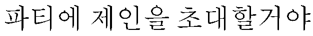 . 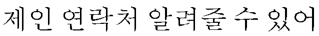 ?" uttered in a first language by the user of the electronic device 501. The electronic device 501 may receive a speech signal in real time and display, on a screen, a real-time translated sentence along with an ASR result. The electronic device 501 may determine " 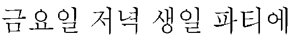 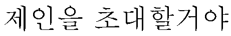 ." to be a single complete sentence in the speech " 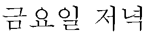 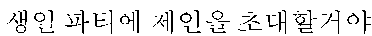 . 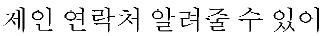 ?", and perform a TTS conversion on a text (e.g., "I'm going to invite Jane to a birthday party on Friday evening.") obtained by translating the complete sentence " 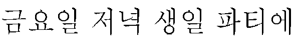 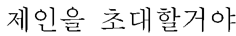 ." into a second language to output a synthetic speech. The electronic device 501 may display a text on the screen according to a timing at which the synthetic speech is output and may differently display information of a portion of the text, such as, for example, the color, font thickness, slant, size, or font style. In this case, the reason why the electronic device 501 changes and displays a displaying method for the portion of the text displayed on the screen according to the timing at which the synthetic speech is output may be to indicate a current progress based on the generation and/or output of the synthetic speech. The electronic device 501 may display, on the display module 595, an indicator (e.g., UI) for controlling the output of the synthetic speech according to a time point to output a TTS result by performing a TTS conversion. The electronic device 501 may mix the speech signal of " 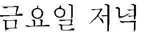 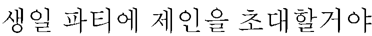 ." and the synthetic speech "I'm going to invite Jane to a birthday party on Friday evening.," and transmit a resulting mixture to the external electronic device 601. After generating and outputting the synthetic speech for "I'm going to invite Jane to a birthday party on Friday evening.", the electronic device 501 may generate and output a synthetic speech for a subsequent text (e.g., "Can you give me Jane's contact information?") translated from " 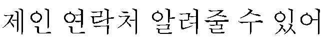 ?" into the second language. The electronic device 501 may mix the speech signal of " 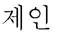 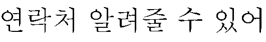 ?" and the synthetic speech "Can you give me Jane's contact information?" and transmit a resulting mixture to the external electronic device 601. The electronic device 501 may transmit, to the external electronic device 601, the speech signal " 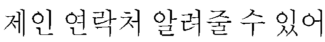 ?" and the synthetic speech "Can you give me Jane's contact information?" at different volume levels. In this case, the electronic device 501 may transmit, to the external electronic device 601, the speech signal " 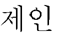 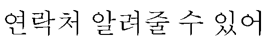 ?" at a first volume level, and a speech obtained by the mixing of the synthetic speech "Can you give me Jane's contact information?" at a second volume level. The first volume level may be smaller than the second volume level, but examples are not limited thereto.

The electronic device 501 may receive a speech "OK. Wait a minute. Instagram ID is happyJane." uttered in the second language by the user of the external electronic device 601. The electronic device 501 may receive a speech signal in real time and display, on the screen, a real-time translated sentence along with an ASR result. The electronic device 501 may determine "OK. Wait a minute." to be a single complete sentence in "OK. Wait a minute. Instagram ID is happyJane.", and may output a synthetic speech by performing a TTS conversion on a text (e.g., " 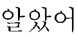 . 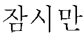 ") obtained by translating "OK. Wait a minute." into the first language. The electronic device 501 may display a text on the screen according to a timing at which the synthetic speech is output and may differently display information of a portion of the text, such as, for example, the color, font thickness, slant, size, or font style. In this case, the reason why the electronic device 501 changes and displays a displaying method for the portion of the text displayed on the screen according to the timing at which the synthetic speech is output may be to indicate a current progress based on the generation and/or output of the synthetic speech. The electronic device 501 may display, on the display module 595, an indicator (e.g., UI) for controlling the output of the synthetic speech according to a time point to output a TTS result by performing a TTS conversion. The electronic device 501 may mix the speech signal "OK. Wait a minute." with the synthetic speech " 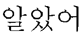 . 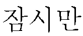 " and output a resulting mixture to the sound output module 593. After generating and outputting the synthetic speech of " 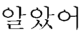 . 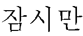 ," the electronic device 501 may generate and output a synthetic speech for a subsequent text (e.g., " 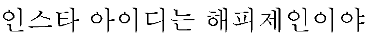 .") obtained by translating "Instagram ID is happyJane." into the first language. The electronic device 501 may mix the speech signal of "Instagram ID is happyJane." with the synthetic speech " 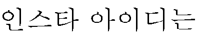 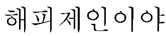 ." and output a resulting mixture to the sound output module 593.

Although FIG. 13 illustrates the example of processing the speech " 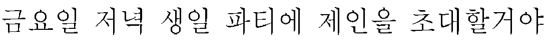 . 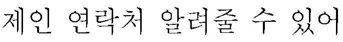 ?" uttered in the first language by the user of the electronic device 501 and then processing the speech "OK. Wait a minute. Instagram ID is happyJane." uttered in the second language by the user of the external electronic device 601, examples are not limited thereto. For example, the electronic device 501 may simultaneously display, on a screen of the electronic device 501, a result of processing the speech " 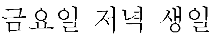 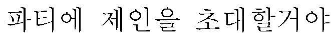 . 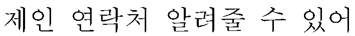 ?" uttered in the first language by the user of the electronic device 501 and a result of processing the speech "OK. Wait a minute. Instagram ID is happyJane." uttered in the second language by the user of the external electronic device 601. In this case, the electronic device 501 may simultaneously display the results, separately, by separating the screen of the electronic device 501 into an area for the user of the electronic device 501 and an area for the user of the external electronic device 601. In a case where the electronic device 501 processes simultaneously (or in parallel) "OK. Wait a minute. Instagram ID is happyJane." uttered in the second language by the user of the external electronic device 601, while the electronic device 501 is processing the speech " 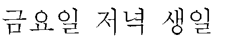 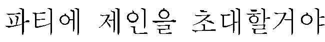 . 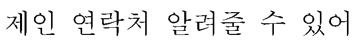 ?" uttered in the first language by the user of the electronic device 501, the electronic device 501 may display corresponding texts on the screen according to a timing at which the corresponding synthetic speeches are output, and may differently display information, such as, for example, the color, font thickness, slant, size, and font style of some of the texts. This may show the current progress of processing " 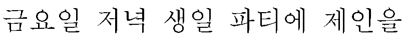 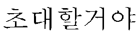 . 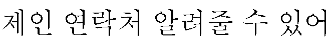 ?" uttered in the first language by the user of the electronic device 501 and the current progress of processing "OK. Wait a minute. Instagram ID is happyJane." uttered in the second language by the user of the external electronic device 601.

The electronic device 501 may accumulate and display, on the screen, results (e.g., translated sentences, ASR results, and an indicator) of processing a speech uttered by the user of the electronic device 501 and/or results (e.g., translated sentences, ASR results, and an indicator) of processing a speech uttered the user of the external electronic device 601. Therefore, the results may be accumulated and displayed on the screen, based on which a synthetic speech is generated. Alternatively, the electronic device 501 may accumulate and display, within a single bubble (e.g., a speech bubble and a note), the results of processing the speech uttered by the user of the electronic device 501, and may accumulate and display, within a single bubble (e.g., a speech bubble and a note), the results of processing the speech uttered by the user of the external electronic device 601. Alternatively, the electronic device 501 may display a result of processing the speech uttered by the user of the electronic device 501 and/or a result of processing the speech uttered by the user of the external electronic device 601 in separate bubbles based on which a synthetic speech is generated, and may then allow the bubbles to disappear from the screen.

According to an embodiment, a method performed by an electronic device (e.g., the electronic device 101 of FIG. 1, the electronic device 201 of FIG. 2, and the electronic device 501 of FIG. 5) during a call may include receiving, by the electronic device, via a microphone, an utterance (or speech) from a user of the electronic device. The method includes performing, by the electronic device, ASR to generate a first text in a first language based on a speech signal corresponding to a portion of the utterance. The method includes identifying, by the electronic device, an end point of a sentence included in the first text based on at least one pause section associated with the first text. The method includes translating, by the electronic device, a portion of the first text corresponding to the sentence into a second text in a second language, based on the identified end point of the sentence included in the first text. The method includes performing, by the electronic device, a TTS conversion on the second text. The method includes generating, by the electronic device, a synthetic speech corresponding to a portion of the utterance before an end of the utterance received from the user, based on the TTS conversion.

According to an embodiment, the method may further include transmitting the synthetic speech toward a counterpart device before an end of a remaining portion of the utterance.

According to an embodiment, the method may further include determining a TTS conversion at each time point at which an end point of a sentence is identified from the first text.

According to an embodiment, the identifying may include identifying the end point of the sentence included in the first text based on a combination of at least one of information about the pause section, incoming token information after the pause section, or punctuation mark information.

According to an embodiment, the method may further include mixing a speech signal corresponding to the sentence in the speech signal and the synthetic speech, and outputting a result therefrom.

According to an embodiment, the method may further include displaying an indicator for controlling an outputting of the synthetic speech.

According to an embodiment, the indicator may include a UI for controlling a combination of at least one of speed, volume, play, or stop of the synthetic speech.

According to an embodiment, the method may further include automatically outputting the synthetic speech when the synthetic speech is generated, or outputting the synthetic speech according to a user input made through the indicator.

According to an embodiment, the method may further include differently displaying a portion of a text displayed on a display based on a time point related to the synthetic speech.

According to an embodiment, the displaying may include changing a combination of at least one of color, font thickness, slant, size, or font type of the portion of the text displayed on the display.

According to an embodiment, an electronic device (e.g., the electronic device 101 of FIG. 1, the electronic device 201 of FIG. 2, and the electronic device 501 of FIG. 5) may include a microphone (e.g., the input module 150 of FIG. 1, the microphone 206 of FIG. 2, and the input module 591 of FIG. 6). The electronic device may include memory (e.g., the memory 130 of FIG. 1, the memory 207 of FIG. 2, and the memory 530 of FIG. 6) storing one or more computer programs. The electronic device may include one or more processors (e.g., the processor 120 of FIG. 1, the processor 203 of FIG. 2, and the processor 520 of FIG. 6) communicatively coupled to the microphone and the memory. The one or more computer programs include computer-executable instructions. The computer-executable instructions, when executed by the one or more processors (120, 203, 520) individually or collectively, may cause the electronic device (101, 201, 501) to receive, via the microphone, an utterance from a user of the electronic device. The computer-executable instructions, when executed by the one or more processors (120, 203, 520) individually or collectively, may cause the electronic device (101, 201, 501) to perform ASR to generate a first text in a first language based on a speech signal corresponding to a portion of the utterance. The computer-executable instructions, when executed by the one or more processors (120, 203, 520) individually or collectively, may cause the electronic device (101, 201, 501) to identify an end point of a sentence included in the first text based on at least one pause section associated with the first text. The computer-executable instructions, when executed by the one or more processors (120, 203, 520) individually or collectively, may cause the electronic device (101, 201, 501) to translate a portion of the first text corresponding to the sentence into a second text in a second language, based on the identified end point of the sentence included in the first text. The computer-executable instructions, when executed by the one or more processors (120, 203, 520) individually or collectively, may cause the electronic device (101, 201, 501) to perform a TTS conversion on the second text. The computer-executable instructions, when executed by the one or more processors (120, 203, 520) individually or collectively, may cause the electronic device (101, 201, 501) to generate a synthetic speech corresponding to a portion of the utterance before an end of the utterance received from the user, based on the TTS conversion.

According to an embodiment, the one or more computer programs further include computer-executable instructions that, when executed by the one or more processors (120, 203, 520) individually or collectively, cause the electronic device (101, 201, 501) to transmit the synthetic speech toward a counterpart device before an end of a remaining portion of the utterance.

According to an embodiment, the one or more computer programs further include computer-executable instructions that, when executed by the one or more processors (120, 203, 520) individually or collectively, cause the electronic device (101, 201, 501) to determine a TTS conversion at each time point at which an end point of a sentence is identified from the first text.

According to an embodiment, the one or more computer programs further include computer-executable instructions that, when executed by the one or more processors (120, 203, 520) individually or collectively, cause the electronic device (101, 201, 501) to identify the end point of the sentence included in the first text based on a combination of at least one of information about the pause section, incoming token information after the pause section, or punctuation mark information

According to an embodiment, the one or more computer programs further include computer-executable instructions that, when executed by the one or more processors (120, 203, 520) individually or collectively, cause the electronic device (101, 201, 501) to mix a speech signal corresponding to the sentence in the speech signal and the synthetic speech, and output a result therefrom.

According to an embodiment, the one or more computer programs further include computer-executable instructions that, when executed by the one or more processors (120, 203, 520) individually or collectively, cause the electronic device (101, 201, 501) to display an indicator for controlling an output of the synthetic speech.

According to an embodiment, the indicator may include a UI for controlling a combination of at least one of speed, volume, play, or stop of the synthetic speech.

According to an embodiment, the one or more computer programs further include computer-executable instructions that, when executed by the one or more processors (120, 203, 520) individually or collectively, cause the electronic device (101, 201, 501) to automatically output the synthetic speech when the synthetic speech is generated, or output the synthetic speech according to a user input made through the indicator.

According to an embodiment, the one or more computer programs further include computer-executable instructions that, when executed by the one or more processors (120, 203, 520) individually or collectively, cause the electronic device (101, 201, 501) to, based on a time point related to the synthetic speech, differently display a combination of at least one of color, font thickness, slant, size, or font type of a portion of a text displayed on a display.

According to various embodiments described herein, an electronic device may be a device of one of various types. The electronic device may include, as nonlimiting examples, a portable communication device (e.g., a smartphone, etc.), a computing device, a portable multimedia device, a portable medical device, a camera, a wearable device, or a home appliance. However, the electronic device is not limited to the examples described above.

It should be appreciated that various embodiments of the disclosure and the terms used therein are not intended to limit the technological features set forth herein to particular embodiments and include various changes, equivalents, or replacements for a corresponding embodiment. As used herein, "A or B," "at least one of A and B," "at least one of A or B," "A, B, or C," "at least one of A, B, and C," and "A, B, or C," each of which may include any one of the items listed together in the corresponding one of the phrases, or all possible combinations thereof. Terms such as "first," "second," or "initial" or "next" or "subsequent" may simply be used to distinguish the component from other components in question, and do not limit the components in other aspects (e.g., importance or order). It is to be understood that if a component (e.g., a first component) is referred to, with or without the term "operatively" or "communicatively," as "coupled with," "coupled to," "connected with," or "connected to" another component (e.g., a second component), it means that the component may be coupled with the other component directly (e.g., by wire), wirelessly, or via a third component.

As used in connection with various embodiments of the disclosure, the term "module" may include a unit implemented in hardware, software, or firmware, and may interchangeably be used with other terms, for example, "logic," "logic block," "part," or "circuitry." A module may be a single integral component, or a minimum unit or part thereof, adapted to perform one or more functions. For example, according to an embodiment, the module may be implemented in the form of an application-specific integrated circuit (ASIC).

Various embodiments set forth herein may be implemented as software (e.g., a program) including one or more instructions that are stored in a storage medium (e.g., internal memory or external memory) that is readable by a machine (e.g., an electronic device). For example, a processor of a device (e.g., the electronic device) may invoke at least one of the one or more instructions stored in the storage medium and execute it. This allows the machine to be operated to perform at least one function according to the at least one instruction invoked. The one or more instructions may include code generated by a complier or code executable by an interpreter. The machine-readable storage medium may be provided in the form of a non-transitory storage medium. Here, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to various embodiments, a method according to an embodiment of the disclosure may be included and provided in a computer program product. The computer program product may be traded as a product between a seller and a buyer. The computer program product may be distributed in the form of a machine-readable storage medium (e.g., compact disc read-only memory (CD-ROM)), or be distributed (e.g., downloaded or uploaded) online via an application store (e.g., PlayStore^{™}) or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components or operations may be omitted, or one or more other components or operations may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

While the disclosure has been shown and described with reference to various embodiments thereof, it will be understood by those skilled in the art that various changes in form and details may be made therein without departing from the spirit and scope of the disclosure as defined by the appended claims and their equivalents.

## Claims

1. A method performed by an electronic device (101; 201; 501) during a call, the method comprising:
receiving, by the electronic device, via a microphone (150; 206; 591), an utterance from a user of the electronic device;
based on a speech signal corresponding to a portion of the utterance, performing, by the electronic device, automatic speech recognition (ASR) to generate a first text in a first language;
based on at least one pause section associated with the first text, identifying, by the electronic device, an end point of a sentence included in the first text;
based on the identified end point of the sentence included in the first text, translating, by the electronic device, a portion of the first text corresponding to the sentence into a second text in a second language;
performing, by the electronic device, a text-to-speech (TTS) conversion on the second text; and
based on the TTS conversion, generating, by the electronic device, a synthetic speech corresponding to a portion of the utterance before an end of the utterance received from the user.

2. The method of claim 1, further comprising:
transmitting the synthetic speech toward a counterpart device before an end of a remaining portion of the utterance.

3. The method of claim 1 or 2, further comprising:
determining a TTS conversion at each time point at which an end point of a sentence is identified from the first text.

4. The method of any one of claims 1 to 3, wherein the identifying of the end point of the sentence included in the first text is based on a combination of at least one of information about the pause section, incoming token information after the pause section, or punctuation mark information.

5. The method of any one of claims 1 to 4, further comprising:
mixing a speech signal corresponding to the sentence in the speech signal and the synthetic speech; and
outputting a result therefrom.

6. The method of any one of claims 1 to 5, further comprising:
displaying an indicator for controlling an outputting of the synthetic speech.

7. The method of any one of claims 1 to 6, wherein the indicator includes a user interface (UI) for controlling a combination of at least one of speed, volume, play, or stop of the synthetic speech.

8. The method of any one of claims 1 to 7, further comprising:
automatically outputting the synthetic speech when the synthetic speech is generated; or
outputting the synthetic speech according to a user input made through the indicator.

9. The method of any one of claims 1 to 8, further comprising:
differently displaying a portion of a text displayed on a display based on a time point related to the synthetic speech.

10. The method of any one of claims 1 to 9, wherein the displaying comprises:
changing a combination of at least one of color, font thickness, slant, size, or font type of the portion of the text displayed on the display.

11. An electronic device (101; 201; 501) comprising:
a microphone (150; 206; 591);
memory (130; 207; 530) storing one or more computer programs; and
one or more processors (120; 203; 520) communicatively coupled to the microphone and the memory,
wherein the one or more computer programs include computer-executable instructions that, when executed by the one or more processors (120; 203; 520) individually or collectively, cause the electronic device (101; 201; 501) to:
receive, via the microphone, an utterance from a user of the electronic device,
based on a speech signal corresponding to a portion of the utterance, perform automatic speech recognition (ASR) to generate a first text in a first language,
based on at least one pause section associated with the first text, identify an end point of a sentence included in the first text,
based on the identified end point of the sentence included in the first text, translate a portion of the first text corresponding to the sentence into a second text in a second language,
perform a text-to-speech (TTS) conversion on the second text, and
based on the TTS conversion, generate a synthetic speech corresponding to a portion of the utterance before an end of the utterance received from the user.

12. The electronic device (101; 201; 501) of claim 11, wherein the one or more computer programs further include computer-executable instructions that, when executed by the one or more processors (120; 203; 520) individually or collectively, cause the electronic device (101; 201; 501) to:
transmit the synthetic speech toward a counterpart device before an end of a remaining portion of the utterance.

13. The electronic device (101; 201; 501) of claim 11 or 12, wherein the one or more computer programs further include computer-executable instructions that, when executed by the one or more processors (120; 203; 520) individually or collectively, cause the electronic device (101; 201; 501) to:
determine a TTS conversion at each time point at which an end point of a sentence is identified from the first text.

14. The electronic device (101; 201; 501) of any one of claims 11 to 13, wherein the one or more computer programs further include computer-executable instructions that, when executed by the one or more processors (120; 203; 520) individually or collectively, cause the electronic device (101; 201; 501) to:
identify the end point of the sentence included in the first text based on a combination of at least one of information about the pause section, incoming token information after the pause section, or punctuation mark information.

15. The electronic device (101; 201; 501) of any one of claims 11 to 14, wherein the one or more computer programs further include computer-executable instructions that, when executed by the one or more processors (120; 203; 520) individually or collectively, cause the electronic device (101; 201; 501) to:
mix a speech signal corresponding to the sentence in the speech signal and the synthetic speech, and
output a result therefrom.
